(19) Europäisches Patentamt
European Patent Office
Office européen des brevets

(11) **EP 4 129 789 A1**

(12) **EUROPEAN PATENT APPLICATION**
published in accordance with Art. 153(4) EPC

(43) Date of publication:
**08.02.2023 Bulletin 2023/06**

(21) Application number: **21780229.7**

(22) Date of filing: **03.02.2021**

(51) International Patent Classification (IPC):
**B60W 30/095** (2012.01)   **G05D 1/02** (1968.09)
**G01C 21/30** (2000.01)

(52) Cooperative Patent Classification (CPC):
**B60W 30/095; G01C 21/30; G05D 1/02**

(86) International application number:
**PCT/CN2021/075057**

(87) International publication number:
**WO 2021/196879 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020  CN 202010246907**

(71) Applicant: **Huawei Technologies Co., Ltd.
Longgang
Shenzhen, Guangdong 518129 (CN)**

(72) Inventors:
• **LI, Fei**
**Shenzhen, Guangdong 518129 (CN)**
• **CHEN, Pengzhen**
**Shenzhen, Guangdong 518129 (CN)**
• **LI, Xiangxu**
**Shenzhen, Guangdong 518129 (CN)**

(74) Representative: **Gill Jennings & Every LLP
The Broadgate Tower
20 Primrose Street
London EC2A 2ES (GB)**

(54) **METHOD AND DEVICE FOR RECOGNIZING DRIVING BEHAVIOR OF VEHICLE**

(57)   A vehicle driving behavior recognition method and apparatus are provided. The recognition method includes: obtaining high-precision map information and feedback data of a target vehicle that is collected by a sensor; obtaining a target feature of the target vehicle based on the feedback data and the high-precision map information; obtaining a probability value of the target vehicle based on the target feature and a Bayesian network, where the probability value of the target vehicle is used to indicate a probability of occurrence of a behavior status of the target vehicle, the behavior status includes lane change and cut-in driving behavior of the target vehicle, and the lane change and cut-in driving behavior is driving behavior that the target vehicle changes a lane and cuts into a lane in which the autonomous vehicle is located; and recognizing a behavior intention of the target vehicle based on the probability value of the target vehicle, where the behavior intention includes an intention for the driving behavior that the target vehicle changes the lane and cuts into the lane in which the autonomous vehicle is located. According to the method, the autonomous vehicle can accurately recognize a behavior intention of another vehicle.

500

| Obtain high-precision map information and feedback data of a target vehicle that is collected by a sensor, where the target vehicle is another vehicle with a risk of colliding with an autonomous vehicle | 510 |

| Obtain a target feature of the target vehicle based on the feedback data and the high-precision map information, where the target feature is used to indicate driving parameter information of the target vehicle and location information of the target vehicle in a lane | 520 |

| Obtain a probability value of the target vehicle based on the target feature and a Bayesian network, where the probability value of the target vehicle is used to indicate a probability of occurrence of a behavior status of the target vehicle, the behavior status includes lane change and cut-in driving behavior of the target vehicle, and the lane change and cut-in driving behavior is driving behavior that the target vehicle changes a lane and cuts into a lane in which the autonomous vehicle is located | 530 |

| Recognize a behavior intention of the target vehicle based on the probability value of the target vehicle, where the behavior intention includes an intention for the driving behavior that the target vehicle changes the lane and cuts into the lane in which the autonomous vehicle is located | 540 |

FIG. 6

EP 4 129 789 A1

**Description**

This application claims priority to Chinese Patent Application No. 202010246907.1, filed with the China National Intellectual Property Administration on March 31, 2020 and entitled "VEHICLE DRIVING BEHAVIOR RECOGNITION METHOD AND APPARATUS", which is incorporated herein by reference in its entirety.

**TECHNICAL FIELD**

This application relates to the autonomous driving field, and in particular, to a vehicle driving behavior recognition method and apparatus.

**BACKGROUND**

Artificial intelligence (artificial intelligence, AI) is theory, method, technology, and applicable system for using a digital computer or a machine controlled by a digital computer to simulate, extend, and expand human intelligence, sense an environment, obtain knowledge, and use the knowledge to obtain an optimal result. In other words, artificial intelligence is a branch of computer science that attempts to understand the essence of intelligence and create a new intelligent machine capable of reacting in a manner similar to that of human intelligence. Artificial intelligence is to study design principles and implementation methods of various intelligent machines to make the machines have perception, inference, and decision-making functions. Studies in the artificial intelligence field include robots, natural language processing, computer vision, decision-making and inference, human-computer interaction, recommendations and searches, basic theories of AI, and the like.

Autonomous driving is a mainstream application in the artificial intelligence field. An autonomous driving technology relies on collaboration of computer vision, radar, monitoring apparatus, global positioning system, and the like, so that a motor vehicle can implement autonomous driving without a proactive manual operation. An autonomous vehicle uses various computing systems to help transport a passenger from one location to another location. Some autonomous vehicles may require some initial inputs or continuous inputs from an operator (for example, a pilot, a driver, or a passenger). The autonomous vehicle allows the operator to switch from a manual operation mode to an autonomous driving mode or a mode between the manual operation mode and the autonomous driving mode. Because the autonomous driving technology does not require manual driving for the motor vehicle, theoretically, a manual driving mistake can be effectively avoided, traffic accidents can be reduced, and transportation efficiency of a highway can be improved. Therefore, the autonomous driving technology attracts increasing attention.

Currently, with respect to a manually driven vehicle, since the driver has abundant priori knowledge and inference ability, therefore the driver can recognize dangerous driving behavior of other vehicles on a road correctly, for example, a driving behavior that the another vehicle changes a lane and cuts into the lane at which the vehicle is located. However, with respect to an autonomous vehicle, how to accurately recognize dangerous driving behavior of another vehicle to effectively improve safety of the autonomous vehicle becomes an issue that urgently needs to be addressed.

**SUMMARY**

This application provides a vehicle driving behavior recognition method and apparatus, so that an autonomous vehicle can accurately recognize driving behavior of another vehicle, thereby effectively improving safety of the autonomous vehicle.

According to a first aspect, a vehicle driving behavior recognition method is provided, including: obtaining high-precision map information and feedback data of a target vehicle that is collected by a sensor, where the target vehicle is another vehicle with a risk of colliding with an autonomous vehicle; obtaining a target feature of the target vehicle based on the feedback data and the high-precision map information, where the target feature is used to indicate driving parameter information of the target vehicle and location information of the target vehicle in a lane; obtaining a probability value of the target vehicle based on the target feature and a Bayesian network, where the probability value of the target vehicle is used to indicate a probability of occurrence of a behavior status of the target vehicle, the behavior status includes lane change and cut-in driving behavior of the target vehicle, and the lane change and cut-in driving behavior is driving behavior that the target vehicle changes a lane and cuts into a lane in which the autonomous vehicle is located; and recognizing a behavior intention of the target vehicle based on the probability value of the target vehicle, where the behavior intention includes an intention for the driving behavior that the target vehicle changes the lane and cuts into the lane in which the autonomous vehicle is located.

The target vehicle may be another vehicle with a risk of colliding with the autonomous vehicle. For example, the target vehicle may be another vehicle with dangerous driving behavior. The dangerous driving behavior of the vehicle includes lane change and cut-in driving behavior. The lane change and cut-in driving behavior is behavior that another vehicle whose distance from the autonomous vehicle is within a specific range changes a lane and cuts into the lane in which the autonomous vehicle is located, or behavior that the another vehicle overtakes the autonomous vehicle and changes a lane to cut into the lane in which the autonomous vehicle is located. The driving behavior may also be referred to as vehicle cut-in behavior.

It should be noted that, in this embodiment of this application, the probability value of the target vehicle may also be referred to as a probability value of occurrence of a behavior status of the target vehicle, that is, the probability value may indicate a probability of occurrence of specific driving behavior of the target vehicle. The behavior status of the target vehicle may include lane change and cut-in driving behavior of the target vehicle. The lane change and cut-in driving behavior is driving behavior that the target vehicle changes a lane and cuts into the lane in which the autonomous vehicle is located.

It should be understood that the recognizing a behavior intention of the target vehicle based on the probability value of the target vehicle may mean that, it may be determined, based on the probability value of the target vehicle, that the target vehicle is to have a behavior intention for the lane change and cut-in driving behavior at a current moment or a future moment. To be specific, recognizing the behavior intention of the target vehicle for the lane change and cut-in driving behavior means that, when the target vehicle is to perform or is performing the lane change and cut-in driving behavior, based on the probability value of the behavior status of the target vehicle, the autonomous vehicle may have priori knowledge and inference ability similar to that of a driver, and recognize the lane change and cut-in driving behavior of the target vehicle, thereby ensuring that the autonomous vehicle does not collide with the target vehicle in a planned travel path.

In a possible implementation, the feedback data of the target vehicle may be data that is related to the target vehicle and that is collected by one or more sensors (for example, a sensor device such as a laser radar, a camera, or a millimeter-wave radar) of the autonomous vehicle. For example, the feedback data may include location information, speed information, orientation angle information, and the like of the target vehicle.

According to the foregoing technical solution, the feedback data of the target vehicle that is on a road and that has a risk of colliding with the autonomous vehicle may be collected by the sensor of the autonomous vehicle, and the target feature of the target vehicle may be accurately obtained based on the feedback data of the target vehicle and the high-precision map information. Further, the probability value of the target vehicle is obtained by using the target feature and the Bayesian network, where the probability value of the target vehicle may be used to indicate the probability of occurrence of the behavior status of the target vehicle, the behavior status may include the lane change and cut-in driving behavior, and the lane change and cut-in driving behavior is driving behavior that the target vehicle changes a lane and cuts into the lane in which the autonomous vehicle is located. The autonomous vehicle can accurately recognize the behavior intention of the target vehicle for the lane change and cut-in driving behavior, thereby ensuring driving safety of the autonomous vehicle.

In a possible implementation, if there are a plurality of target vehicles with a risk of colliding with the autonomous vehicle, priorities of the plurality of target vehicles may be determined based on a lane constraint and a distance constraint, and a behavior intention of a target vehicle with a high priority may be preferentially inferred.

In a possible implementation, driving behavior of the target vehicle may be predicted based on the probability value of the target vehicle. For example, when the probability value of the target vehicle is equal to 1 or close to 1, it indicates that the target vehicle has a behavior intention for lane change and cut-in behavior; or when the probability value probability of the target vehicle is equal to 0 or close to 0, it indicates that the target vehicle has no behavior intention for lane change and cut-in driving behavior. When the target vehicle has a behavior intention for lane change and cut-in driving behavior, the autonomous vehicle may re-plan a travel path for the autonomous vehicle to avoid collision with the target vehicle.

With reference to the first aspect, in some implementations of the first aspect, the target feature includes lane boundary distance information, the lane boundary distance information is information about a lateral distance between the target vehicle and a boundary of the lane in which the adjacent autonomous vehicle is located, and the obtaining a target feature of the target vehicle based on the feedback data and the high-precision map information includes:
obtaining visible edge information of the target vehicle based on the feedback data, where the feedback data includes contour information of the target vehicle; obtaining, based on the high-precision map information, lateral boundary line information of the lane in which the autonomous vehicle is located; and obtaining the lane boundary distance information based on the visible edge information and the lateral boundary line information.

According to the foregoing technical solution, when the target feature of the target vehicle is obtained based on the high-precision map information and the feedback data of the target vehicle that is collected by the sensor, the target vehicle may be considered as a non-mass point. To be specific, the contour information of the target vehicle may be obtained, and the lane boundary distance information of the target vehicle may be determined by using the contour information of the target vehicle and the high-precision map information. In this way, the distance between the target vehicle and the boundary of the lane in which the autonomous vehicle is located can be accurately described, thereby improving precision of obtaining the target feature.

In a possible implementation, the target feature may include a physical feature, a static interaction feature, and a dynamic interaction feature of the target vehicle. The physical feature may be driving information of the target vehicle that is obtained by a perception system. For example, the physical feature may include an orientation angle (for example, a heading angle) and a lateral speed of the target vehicle. The static interaction feature may be obtained relative information of the target vehicle and the road. For example, the static interaction feature may include a lane boundary distance. The dynamic interaction feature may be an obtained relative feature between the target vehicle and the autonomous vehicle. For example, the dynamic interaction feature may include a relative speed and a relative distance between the target vehicle and the autonomous vehicle.

With reference to the first aspect, in some implementations of the first aspect, the method further includes: performing discretization processing on the target feature based on a warning time to obtain a target feature obtained after the discretization processing, where the warning time is determined based on a motion status of the autonomous vehicle; and the obtaining a probability value of the target vehicle based on the target feature and a Bayesian network includes: obtaining the probability value of the target vehicle based on the target feature obtained after the discretization processing and the Bayesian network.

It should be noted that the motion status of the autonomous vehicle may be indicated by a speed parameter of the autonomous vehicle or an acceleration of the autonomous vehicle.

In a possible implementation, a higher speed of the autonomous vehicle or a higher acceleration of the autonomous vehicle indicates that a longer warning time may be set, to ensure that the autonomous vehicle has sufficient time to recognize a behavior intention of another vehicle and adjust a planned path based on the behavior intention of the another vehicle in a timely manner.

It should be understood that, in this embodiment of this application, the obtained target feature of the target vehicle needs to be input to the Bayesian network, to predict the behavior status of the target vehicle and obtain the probability value of the target vehicle. However, a parameter input to the Bayesian network is a discrete parameter. Therefore, discretization processing needs to be performed on the obtained target feature of the target vehicle.

According to the foregoing technical solution, a non-fixed threshold may be used. To be specific, discretization processing may be performed on the obtained target feature of the target vehicle by using the warning time determined based on the motion status of the autonomous vehicle, to obtain the target feature obtained after the discretization processing, thereby improving precision of a discrete description of the target feature.

With reference to the first aspect, in some implementations of the first aspect, probability values that are of the target vehicle at any two moments and that are obtained by using the Bayesian network are independent of each other.

According to the foregoing technical solution, to meet real-time performance of calculating a posterior probability of a behavior status of the target vehicle online by the Bayesian network, that is, to ensure that the autonomous vehicle can accurately recognize a behavior status of the target vehicle in a timely manner and adjust a planned path to ensure that the autonomous vehicle travels safely, a simple Bayesian network, namely, a Bayesian network structure in which posterior probabilities of behavior statuses of the target vehicle at different moments are calculated independently, may be used, so that calculation efficiency of the Bayesian network can be effectively improved.

In a possible implementation, the Bayesian network may be a dynamic Bayesian network. To be specific, probability values of the target vehicle at different moments may be correlated with each other.

With reference to the first aspect, in some implementations of the first aspect, the probability value of the target vehicle is a fused probability value of the target vehicle, and the recognizing a behavior intention of the target vehicle based on the probability value of the target vehicle includes:
fusing a probability value of the target vehicle at a current moment and a probability value of the target vehicle at a historical moment to obtain the fused probability value of the target vehicle, where the historical moment includes at least any one moment earlier than the current moment; and recognizing the behavior intention of the target vehicle based on the fused probability value of the target vehicle.

According to the foregoing technical solution, fusion may be performed on probability values of the target vehicle at a plurality of different moments, to suppress a random change of a behavior status of the target vehicle caused by noise or the like, thereby improving robustness of recognition by the autonomous vehicle.

In a possible implementation, the historical moment may be a previous moment earlier than the current moment.

In another possible implementation, the historical moment may be alternatively several consecutive moments earlier than the current moment or all moments earlier than the current moment. For example, the current moment may be a fifth moment. In this case, the historical moment may be several consecutive moments earlier than the fifth moment, for example, a first moment to a fourth moment, or the second moment to the fourth moment.

With reference to the first aspect, in some implementations of the first aspect, the fusing a probability value of the target vehicle at a current moment and a probability value of the target vehicle at a historical moment to obtain the fused probability value of the target vehicle includes:
fusing the probability value of the target vehicle at the current moment and the probability value of the target vehicle at the historical moment by using a DS evidence theory, to obtain the fused probability value of the target vehicle.

It should be understood that the DS evidence theory is the Dempster/Shafer (Dempster/Shafer) evidence theory, which may also be referred to as a belief function theory or an evidence theory.

In the DS evidence theory, a nonempty set including mutually exclusive elementary propositions (hypotheses) is referred to as a frame of discernment, which indicates all possible solutions to a problem, where only one solution is true. A subset of the frame is referred to as a proposition. A degree of belief assigned to each proposition is referred to as a basic probability assignment (BPA, also referred to as an m function), where m(A) is a basic belief number and reflects a degree of belief in A. A belief function Bel(A) indicates a degree of belief in a proposition A, and a likelihood function PI(A) indicates a degree of belief that the proposition A is not false, namely, uncertainty measure of that A seems likely to be true. [Bel(A), PI(A)] indicates an uncertainty interval of A, [0, Bel(A)] indicates a support evidence interval of the proposition A, [0, PI(A)] indicates a confidence interval of the proposition A, and [PI(A), 1] indicates a rejection evidence interval of the proposition A. Assuming that m1 and m2 are basic probability assignment functions derived from two independent evidence sources (sensors), the Dempster's rule of combination may calculate a new basic probability assignment function produced jointly by using the two evidences.

With reference to the first aspect, in some implementations of the first aspect, the fusing a probability value of the target vehicle at a current moment and a probability value of the target vehicle at a historical moment to obtain the fused probability value of the target vehicle includes: determining the historical moment based on a preset time window; and fusing the probability value of the target vehicle at the current moment and the probability value of the target vehicle at the historical moment to obtain the fused probability value of the target vehicle.

According to a second aspect, a vehicle driving behavior recognition apparatus is provided, including: an obtaining module, configured to obtain high-precision map information and feedback data of a target vehicle that is collected by a sensor, where the target vehicle is another vehicle with a risk of colliding with an autonomous vehicle; and a processing module, configured to: obtain a target feature of the target vehicle based on the feedback data and the high-precision map information, where the target feature is used to indicate driving parameter information of the target vehicle and location information of the target vehicle in a lane; obtain a probability value of the target vehicle based on the target feature and a Bayesian network, where the probability value of the target vehicle is used to indicate a probability of occurrence of a behavior status of the target vehicle, the behavior status includes lane change and cut-in driving behavior of the target vehicle, and the lane change and cut-in driving behavior is driving behavior that the target vehicle changes a lane and cuts into a lane in which the autonomous vehicle is located; and recognize a behavior intention of the target vehicle based on the probability value of the target vehicle, where the behavior intention includes an intention for the driving behavior that the target vehicle changes the lane and cuts into the lane in which the autonomous vehicle is located.

The target vehicle may be another vehicle with a risk of colliding with the autonomous vehicle. For example, the target vehicle may be another vehicle with dangerous driving behavior. The dangerous driving behavior of the vehicle includes lane change and cut-in driving behavior. The lane change and cut-in driving behavior is behavior that another vehicle whose distance from the autonomous vehicle is within a specific range changes a lane and cuts into the lane in which the autonomous vehicle is located, or behavior that the another vehicle overtakes the autonomous vehicle and changes a lane to cut into the lane in which the autonomous vehicle is located. The driving behavior may also be referred to as vehicle cut-in behavior.

It should be noted that, in this embodiment of this application, the probability value of the target vehicle may also be referred to as a probability value of occurrence of a behavior status of the target vehicle, that is, the probability value may indicate a probability of occurrence of specific driving behavior of the target vehicle. The behavior status of the target vehicle may include lane change and cut-in driving behavior of the target vehicle. The lane change and cut-in driving behavior is driving behavior that the target vehicle changes a lane and cuts into the lane in which the autonomous vehicle is located.

It should be understood that the recognizing a behavior intention of the target vehicle based on the probability value of the target vehicle may mean that, it may be determined, based on the probability value of the target vehicle, that the target vehicle is to have a behavior intention for the lane change and cut-in driving behavior at a current moment or a future moment. To be specific, recognizing the behavior intention of the target vehicle for the lane change and cut-in driving behavior means that, when the target vehicle is to perform or is performing the lane change and cut-in driving behavior, based on the probability value of the behavior status of the target vehicle, the autonomous vehicle may have priori knowledge and inference ability similar to that of a driver, and recognize the lane change and cut-in driving behavior of the target vehicle, thereby ensuring that the autonomous vehicle does not collide with the target vehicle in a planned travel path.

In a possible implementation, the feedback data of the target vehicle may be data that is related to the target vehicle and that is collected by one or more sensors (for example, a sensor device such as a laser radar, a camera, or a millimeter-wave radar) of the autonomous vehicle. For example, the feedback data may include location information, speed information, orientation angle information, and the like of the target vehicle.

According to the foregoing technical solution, the feedback data of the target vehicle that is on a road and that has a risk of colliding with the autonomous vehicle may be collected by the sensor of the autonomous vehicle, and the target feature of the target vehicle may be accurately obtained based on the feedback data of the target vehicle and the high-precision map information. Further, the probability value of the target vehicle is obtained by using the target feature and the Bayesian network, where the behavior status may include the lane change and cut-in driving behavior, and the lane change and cut-in driving behavior is driving behavior that the target vehicle changes a lane and cuts into the lane in which the autonomous vehicle is located. The autonomous vehicle can accurately recognize the behavior intention of the target vehicle for the lane change and cut-in driving behavior, thereby ensuring driving safety of the autonomous vehicle.

In a possible implementation, if there are a plurality of target vehicles with a risk of colliding with the autonomous vehicle, priorities of the plurality of target vehicles may be determined based on a lane constraint and a distance constraint, and a behavior intention of a target vehicle with a high priority may be preferentially inferred.

In a possible implementation, driving behavior of the target vehicle may be predicted based on the probability value of the target vehicle. For example, when the probability value of the target vehicle is equal to 1 or close to 1, it indicates that the target vehicle has a behavior intention for lane change and cut-in behavior; or when the probability value probability of the target vehicle is equal to 0 or close to 0, it indicates that the target vehicle has no behavior intention for lane change and cut-in driving behavior. When the target vehicle has a behavior intention for lane change and cut-in driving behavior, the autonomous vehicle may re-plan a travel path for the autonomous vehicle to avoid collision with the target vehicle.

With reference to the second aspect, in some implementations of the second aspect, the target feature includes lane boundary distance information, the lane boundary distance information is information about a lateral distance between the target vehicle and a boundary of the lane in which the adjacent autonomous vehicle is located, and the processing module is specifically configured to:
obtain visible edge information of the target vehicle based on the feedback data, where the feedback data includes contour information of the target vehicle; obtain, based on the high-precision map information, lateral boundary line information of the lane in which the autonomous vehicle is located; and obtain the lane boundary distance information based on the visible edge information and the lateral boundary line information.

According to the foregoing technical solution, when the target feature of the target vehicle is obtained based on the high-precision map information and the feedback data of the target vehicle that is collected by the sensor, the target vehicle may be considered as a non-mass point. To be specific, the contour information of the target vehicle may be obtained, and the lane boundary distance information of the target vehicle may be determined by using the contour information of the target vehicle and the high-precision map information. In this way, the distance between the target vehicle and the boundary of the lane in which the autonomous vehicle is located can be accurately described, thereby improving precision of obtaining the target feature.

In a possible implementation, the target feature may include a physical feature, a static interaction feature, and a dynamic interaction feature of the target vehicle. The physical feature may be driving information of the target vehicle that is obtained by a perception system. For example, the physical feature may include an orientation angle (for example, a heading angle) and a lateral speed of the target vehicle. The static interaction feature may be obtained relative information of the target vehicle and the road. For example, the static interaction feature may include a lane boundary distance. The dynamic interaction feature may be an obtained relative feature between the target vehicle and the autonomous vehicle. For example, the dynamic interaction feature may include a relative speed and a relative distance between the target vehicle and the autonomous vehicle.

With reference to the second aspect, in some implementations of the second aspect, the processing module is further configured to: perform discretization processing on the target feature based on a warning time to obtain a target feature obtained after the discretization processing, where the warning time is determined based on a motion status of the autonomous vehicle; and
the processing module is specifically configured to: obtain the probability value of the target vehicle based on the target feature obtained after the discretization processing and the Bayesian network.

It should be noted that the motion status of the autonomous vehicle may be indicated by a speed parameter of the autonomous vehicle or an acceleration of the autonomous vehicle.

In a possible implementation, a higher speed of the autonomous vehicle or a higher acceleration of the autonomous vehicle indicates that a longer warning time may be set, to ensure that the autonomous vehicle has sufficient time to recognize a behavior intention of another vehicle and adjust a planned path based on the behavior intention of the another vehicle in a timely manner.

It should be understood that, in this embodiment of this application, the obtained target feature of the target vehicle needs to be input to the Bayesian network, to predict the behavior status of the target vehicle and obtain the probability value of the target vehicle. However, a parameter input to the Bayesian network is a discrete parameter. Therefore, discretization processing needs to be performed on the obtained target feature of the target vehicle.

According to the foregoing technical solution, a non-fixed threshold may be used. To be specific, discretization processing may be performed on the obtained target feature of the target vehicle by using the warning time determined based on the motion status of the autonomous vehicle, to obtain the target feature obtained after the discretization processing, thereby improving precision of a discrete description of the target feature.

With reference to the second aspect, in some implementations of the second aspect, probability values that are of the target vehicle at any two moments and that are obtained by using the Bayesian network are independent of each other.

According to the foregoing technical solution, to meet real-time performance of calculating a posterior probability of a behavior status of the target vehicle online by the Bayesian network, that is, to ensure that the autonomous vehicle can accurately recognize a behavior status of the target vehicle in a timely manner and adjust a planned path so that the autonomous vehicle travels safely, a simple Bayesian network, namely, a Bayesian network structure in which posterior probabilities of behavior statuses at different moments are calculated independently, may be used, so that calculation efficiency of the Bayesian network can be effectively improved.

In a possible implementation, the Bayesian network may be a dynamic Bayesian network. To be specific, probability values of the target vehicle at different moments may be correlated with each other.

With reference to the second aspect, in some implementations of the second aspect, the probability value of the target vehicle is a fused probability value of the target vehicle, and the processing module is specifically configured to: fuse a probability value of the target vehicle at a current moment and a probability value of the target vehicle at a historical moment to obtain the fused probability value of the target vehicle, where the historical moment includes at least any one moment earlier than the current moment; and recognize the behavior intention of the target vehicle based on the fused probability value of the target vehicle.

In a possible implementation, the historical moment may be a previous moment earlier than the current moment.

In another possible implementation, the historical moment may be alternatively several consecutive moments earlier than the current moment or all moments earlier than the current moment. For example, the current moment may be a fifth moment. In this case, the historical moment may be several consecutive moments earlier than the fifth moment, for example, a first moment to a fourth moment, or the second moment to the fourth moment.

According to the foregoing technical solution, fusion may be performed on probability values of the target vehicle at a plurality of different moments, to suppress a random change of a behavior status of the target vehicle caused by noise or the like, thereby improving robustness of recognition by the autonomous vehicle.

With reference to the second aspect, in some implementations of the second aspect, the processing module is specifically configured to:

fuse the probability value of the target vehicle at the current moment and the probability value of the target vehicle at the historical moment by using a DS evidence theory, to obtain the fused probability value of the target vehicle.

It should be understood that the DS evidence theory is the Dempster/Shafer (Dempster/Shafer) evidence theory, which may also be referred to as a belief function theory or an evidence theory.

In the DS evidence theory, a nonempty set including mutually exclusive elementary propositions (hypotheses) is referred to as a frame of discernment, which indicates all possible solutions to a problem, where only one solution is true. A subset of the frame is referred to as a proposition. A degree of belief assigned to each proposition is referred to as a basic probability assignment (BPA, also referred to as an m function), where m(A) is a basic belief number and reflects a degree of belief in A. A belief function Bel(A) indicates a degree of belief in a proposition A, and a likelihood function PI(A) indicates a degree of belief that the proposition A is not false, namely, uncertainty measure of that A seems likely to be true. [Bel(A), PI(A)] indicates an uncertainty interval of A, [0, Bel(A)] indicates a support evidence interval of the proposition A, [0, PI(A)] indicates a confidence interval of the proposition A, and [PI(A), 1] indicates a rejection evidence interval of the proposition A. Assuming that m1 and m2 are basic probability assignment functions derived from two independent evidence sources (sensors), the Dempster's rule of combination may calculate a new basic probability assignment function produced jointly by using the two evidences.

With reference to the second aspect, in some implementations of the second aspect, the processing module is specifically configured to:

determine the historical moment based on a preset time window; and fuse the probability value of the target vehicle at the current moment and the probability value of the target vehicle at the historical moment to obtain the fused probability value of the target vehicle.

According to a third aspect, a vehicle driving behavior recognition apparatus is provided, including: a memory, configured to store a program; and a processor, configured to execute the program stored in the memory. When the program stored in the memory is executed, the processor is configured to perform the following processes: obtaining high-precision map information and feedback data of a target vehicle that is collected by a sensor, where the target vehicle is another vehicle with a risk of colliding with an autonomous vehicle; obtaining a target feature of the target vehicle based on the feedback data and the high-precision map information, where the target feature is used to indicate driving parameter information of the target vehicle and location information of the target vehicle in a lane; obtaining a probability value of the target vehicle based on the target feature and a Bayesian network, where the probability value of the target vehicle is used to indicate a probability of occurrence of a behavior status of the target vehicle, the behavior status includes lane change and cut-in driving behavior of the target vehicle, and the lane change and cut-in driving behavior is driving behavior that the target vehicle changes a lane and cuts into a lane in which the autonomous vehicle is located; and recognizing a behavior intention of the target vehicle based on the probability value of the target vehicle, where the behavior intention includes an intention for the driving behavior that the target vehicle changes the lane and cuts into the lane in which the autonomous vehicle is located.

In a possible implementation, the processor included in the detection apparatus is further configured to perform the vehicle driving behavior recognition method in any one of the first aspect or the implementations of the first aspect.

It should be understood that the extensions, limitations, explanations, and descriptions of related content in the first aspect are also applicable to the same content in the third aspect.

According to a fourth aspect, an autonomous vehicle is provided. The autonomous vehicle includes the vehicle driving behavior recognition apparatus in any one of the first aspect, the second aspect, or the implementations of the first aspect or the second aspect.

According to a fifth aspect, a computer-readable storage medium is provided. The computer-readable medium storage medium is configured to store program code. When the program code is executed by a computer, the computer is configured to perform the vehicle driving behavior recognition method in any one of the first aspect or the implementations of the first aspect.

According to a sixth aspect, a chip is provided. The chip includes a processor, and the processor is configured to perform the vehicle driving behavior recognition method in any one of the first aspect or the implementations of the first aspect.

In a possible implementation, the chip in the fifth aspect may be located in a vehicle-mounted terminal of an autonomous vehicle.

According to a seventh aspect, a computer program product is provided. The computer program product includes computer program code, and when the computer program code is run on a computer, the computer is enabled to perform the vehicle driving behavior recognition method in any one of the first aspect or the implementations of the first aspect.

It should be noted that all or some of the computer program code may be stored in a first storage medium, where the first storage medium may be packaged together with a processor, or the first storage medium and the processor may be packaged separately. This is not specifically limited in this embodiment of this application.

## BRIEF DESCRIPTION OF DRAWINGS

FIG. 1 is a schematic diagram of a structure of a vehicle according to an embodiment of this application;
FIG. 2 is a schematic diagram of a structure of a computer system according to an embodiment of this application;
FIG. 3 is a schematic diagram of application of a cloud-side instruction-based autonomous vehicle according to an embodiment of this application;
FIG. 4 is a schematic diagram of an application scenario of a vehicle driving behavior recognition method according to an embodiment of this application;
FIG. 5 is a schematic diagram of a system architecture to which a vehicle driving behavior recognition method is applicable according to an embodiment of this application;
FIG. 6 is a schematic flowchart of a vehicle driving behavior recognition method according to an embodiment of this application;
FIG. 7 is a schematic flowchart of another vehicle driving behavior recognition method according to an embodiment of this application;
FIG. 8 is a schematic diagram of a lane constraint according to an embodiment of this application;
FIG. 9 is a schematic diagram of a static interaction feature according to an embodiment of this application;
FIG. 10 is a schematic diagram of a Bayesian network according to an embodiment of this application;
FIG. 11 is a schematic diagram of a structure of a vehicle driving behavior recognition apparatus according to an embodiment of this application; and
FIG. 12 is a schematic diagram of a structure of another vehicle driving behavior recognition apparatus according to an embodiment of this application.

## DESCRIPTION OF EMBODIMENTS

The following describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

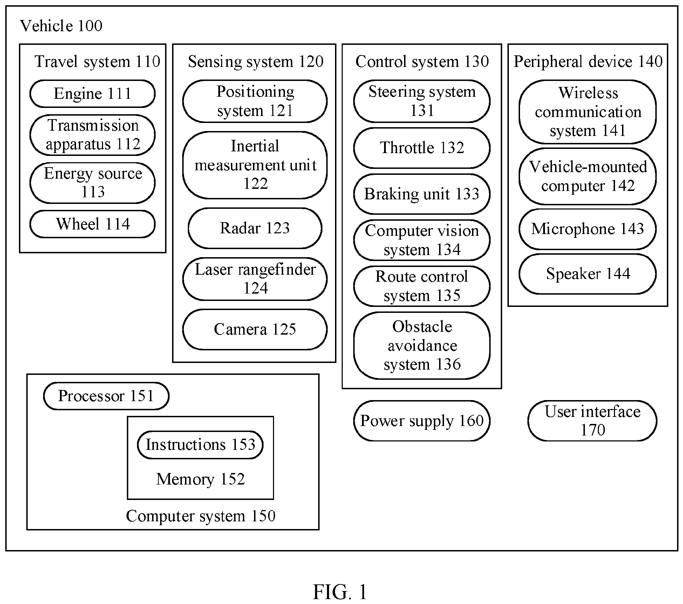

FIG. 1 is a functional block diagram of a vehicle 100 according to an embodiment of this application.

The vehicle 100 may be a manually driven vehicle, or the vehicle 100 may be configured to be in a fully or partially autonomous driving mode.

In an example, the vehicle 100 may control the vehicle 100 in the autonomous driving mode, determine a current status of the vehicle and an ambient environment of the vehicle through a manual operation, determine possible behavior of at least one another vehicle in the ambient environment, determine a confidence level corresponding to a possibility of performing the possible behavior by the another vehicle, and control the vehicle 100 based on determined information. When the vehicle 100 is in the autonomous driving mode, the vehicle 100 may be configured to operate without interacting with a person.

The vehicle 100 may include various subsystems, for example, a travel system 110, a sensing system 120, a control system 130, one or more peripheral devices 140, a power supply 160, a computer system 150, and a user interface 170.

Optionally, the vehicle 100 may include more or fewer subsystems, and each subsystem may include a plurality of elements. In addition, the subsystems and the elements of the vehicle 100 may be all interconnected in a wired or wireless manner.

For example, the travel system 110 may include a component configured to provide power for motion of the vehicle 100. In an embodiment, the travel system 110 may include an engine 111, a transmission apparatus 112, an energy source 113, and a wheel 1 14/tire. The engine 111 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 111 may convert the energy source 113 into mechanical energy.

For example, the energy source 113 may include gasoline, diesel, other petroleum-based fuels, propane, other compressed gas-based fuels, anhydrous alcohol, a photovoltaic module, a battery, and other power sources. The energy source 113 may also provide energy for another system of the vehicle 100.

For example, the transmission apparatus 112 may include a gearbox, a differential, and a drive shaft. The transmission apparatus 112 may transmit mechanical power from the engine 111 to the wheel 114.

In an embodiment, the transmission apparatus 112 may further include another device, for example, a clutch. The drive shaft may include one or more shafts that may be coupled to one or more wheels 114.

For example, the sensing system 120 may include several sensors that sense information about an ambient environment of the vehicle 100.

For example, the sensing system 120 may include a positioning system 121 (for example, a GPS system, a BeiDou system, or another positioning system), an inertial measurement unit (inertial measurement unit, IMU) 122, a radar 123, a laser rangefinder 124, and a camera 125. The sensing system 120 may further include a sensor that monitors an internal system of the vehicle 100 (for example, a vehicle-mounted air quality monitor, a fuel gauge, or an oil temperature gauge). Sensor data from one or more of these sensors may be used to detect an object and corresponding features (a location, a shape, a direction, a speed, and the like) of the object. The detection and recognition are key functions for implementing a safe operation by the autonomous vehicle 100.

The positioning system 121 may be configured to estimate a geographical location of the vehicle 100. The IMU 122 may be configured to sense a location and direction change of the vehicle 100 based on an inertial acceleration. In an embodiment, the IMU 122 may be a combination of an accelerometer and a gyroscope.

For example, the radar 123 may use a radio signal to sense an object in an ambient environment of the vehicle 100. In some embodiments, in addition to sensing an object, the radar 123 may be further configured to sense a speed and/or an advancing direction of the object.

For example, the laser rangefinder 124 may use laser light to sense an object in an environment in which the vehicle 100 is located. In some embodiments, the laser rangefinder 124 may include one or more laser sources, a laser scanner, one or more detectors, and another system component.

For example, the camera 125 may be configured to capture a plurality of images of an ambient environment of the vehicle 100. For example, the camera 125 may be a still camera or a video camera.

As shown in FIG. 1, the control system 130 controls operations of the vehicle 100 and components of the vehicle 100. The control system 130 may include various elements, for example, may include a steering system 131, a throttle 132, a braking unit 133, a computer vision system 134, a route control system 135, and an obstacle avoidance system 136.

For example, the steering system 131 may operate to adjust an advancing direction of the vehicle 100. For example, in an embodiment, the steering system 131 may be a steering wheel system. The throttle 132 may be configured to control an operating speed of the engine 111, so as to control a speed of the vehicle 100.

For example, the braking unit 133 may be configured to control the vehicle 100 to decelerate. The braking unit 133 may slow down the wheel 114 through friction. In another embodiment, the braking unit 133 may convert kinetic energy of the wheel 114 into a current. Alternatively, the braking unit 133 may reduce a rotational speed of the wheel 114 in another form, so as to control the speed of the vehicle 100.

As shown in FIG. 1, the computer vision system 134 may operate to process and analyze an image captured by the camera 125, so as to recognize objects and/or features in the ambient environment of the vehicle 100. The objects and/or the features may include a traffic signal, a road boundary, and an obstacle. The computer vision system 134 may use an object recognition algorithm, a structure from motion (Structure from motion, SFM) algorithm, video tracking, and other computer vision technologies. In some embodiments, the computer vision system 134 may be configured to draw a map for an environment, track an object, estimate a speed of an object, and the like.

For example, the route control system 135 may be configured to determine a travel route for the vehicle 100. In some embodiments, the route control system 135 may determine the travel route for the vehicle 100 with reference to data from the sensor, the GPS, and one or more predetermined maps.

As shown in FIG. 1, the obstacle avoidance system 136 may be configured to recognize, evaluate, and avoid or bypass, in another manner, a potential obstacle in an environment of the vehicle 100.

In an example, the control system 130 may additionally or alternatively include components other than those shown and described. Alternatively, some of the components shown above may be omitted.

As shown in FIG. 1, the vehicle 100 may interact with an external sensor, another vehicle, another computer system, or a user by using the peripheral device 140. The peripheral device 140 may include a wireless communication system 141, a vehicle-mounted computer 142, a microphone 143, and/or a speaker 144.

In some embodiments, the peripheral device 140 may provide a means for the vehicle 100 to interact with the user interface 170. For example, the vehicle-mounted computer 142 may provide information for a user of the vehicle 100. The user interface 116 may further operate the vehicle-mounted computer 142 to receive a user input. The vehicle-mounted computer 142 may be operated by using a touchscreen. In other cases, the peripheral device 140 may provide a means for the vehicle 100 to communicate with another device located in the vehicle. For example, the microphone 143 may receive audio (for example, a voice command or another audio input) from the user of the vehicle 100. Likewise, the speaker 144 may output audio to the user of the vehicle 100.

As shown in FIG. 1, the wireless communication system 141 may wirelessly communicate with one or more devices directly or through a communication network. For example, the wireless communication system 141 may use 3G cellular communication such as code division multiple access (code division multiple access, CDMA), EVD0, or global system for mobile communications (global system for mobile communications, GSM)/general packet radio service (general packet radio service, GPRS), 4G cellular communication such as long term evolution (long term evolution, LTE), or 5G cellular communication. The wireless communication system 141 may communicate with a wireless local area network (wireless local area network, WLAN) through wireless fidelity (Wi-Fi).

In some embodiments, the wireless communication system 141 may directly communicate with a device by using an infrared link, Bluetooth, or the ZigBee (ZigBee) protocol. Other wireless protocols, such as various vehicle communication systems, for example, the wireless communication system 141, may include one or more dedicated short range communications (dedicated short range communications, DSRC) devices, and these devices may include public and/or private data communication between vehicles and/or roadside stations.

As shown in FIG. 1, the power supply 160 may supply power to the components of the vehicle 100. In an embodiment, the power supply 160 may be a rechargeable lithium-ion or lead-acid battery. One or more battery packs of such a battery may be configured as a power supply to supply power to the components of the vehicle 100. In some embodiments, the power supply 160 and the energy source 113 may be implemented together. For example, the power supply 160 and the energy source 113 are implemented together in some all-electric vehicles.

For example, some or all functions of the vehicle 100 may be controlled by the computer system 150. The computer system 150 may include at least one processor 151. The processor 151 executes instructions 153 stored in a non-transitory computer-readable medium such as the memory 152. The computer system 150 may be alternatively a plurality of computing devices that control individual components or subsystems of the vehicle 100 in a distributed manner.

For example, the processor 151 may be any conventional processor such as a commercially available CPU.

Optionally, the processor may be a dedicated device such as an ASIC or another hardware-based processor. Although FIG. 1 functionally shows the processor, the memory, and other elements of the computer in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Therefore, a reference to the processor or the computer is understood as including a reference to a set of processors, computers, or memories that may or may not operate in parallel. Different from using a single processor to perform the steps described herein, some components, such as a steering component and a deceleration component, each may have its own processor, and the processor performs only calculation related to a component-specific function.

In various aspects described herein, the processor may be located away from the vehicle and wirelessly communicate with the vehicle. In another aspect, some of the processes described herein are performed on a processor arranged in the vehicle, and others are performed by a remote processor, including performing a necessary step to perform single manipulation.

In some embodiments, the memory 152 may include instructions 153 (for example, program logic), and the instructions 153 may be executed by the processor 151 to perform various functions of the vehicle 100, including the functions described above. The memory 152 may also include additional instructions, for example, including instructions to send data to, receive data from, interact with, and/or control one or more of the travel system 110, the sensing system 120, the control system 130, and the peripheral device 140.

For example, in addition to the instructions 153, the memory 152 may further store data, for example, road map and route information; a location, a direction, a speed, and other vehicle data of a vehicle; and other information. The information may be used by the vehicle 100 and the computer system 150 when the vehicle 100 operates in an autonomous mode, a semi-autonomous mode, and/or a manual mode.

As shown in FIG. 1, the user interface 170 may be configured to provide information for or receive information from the user of the vehicle 100. Optionally, the user interface 170 may include one or more input/output devices in a set of peripheral devices 140, for example, the wireless communication system 141, the vehicle-mounted computer 142, the microphone 143, and the speaker 144.

In this embodiment of this application, the computer system 150 may control a function of the vehicle 100 based on inputs received from various subsystems (for example, the travel system 110, the sensing system 120, and the control system 130) and the user interface 170. For example, the computer system 150 may control, by using an input from the control system 130, the braking unit 133 to avoid obstacles detected by the sensing system 120 and the obstacle avoidance system 136. In some embodiments, the computer system 150 is operable to provide control over many aspects of the vehicle 100 and the subsystems of the vehicle 100.

Optionally, one or more of the foregoing components may be mounted in separation from or associated with the vehicle 100. For example, the memory 152 may be partially or completely separated from the vehicle 100. The foregoing components may be communicatively coupled together in a wired and/or wireless manner.

Optionally, the foregoing components are merely examples. In actual application, components in the foregoing modules may be added or omitted according to an actual requirement. FIG. 1 should not be understood as a limitation on embodiments of this application.

Optionally, the vehicle 100 may be an autonomous vehicle traveling on a road, and may recognize an object in an ambient environment of the car, to determine whether to adjust a current speed. The object may be another vehicle, a traffic control device, or another type of object. In some examples, each recognized object may be independently considered, and a speed to which the autonomous vehicle needs to be adjusted may be determined based on a feature of the object, for example, a current speed or an acceleration of the object, or a distance between the object and the vehicle.

Optionally, the vehicle 100 or computing devices (for example, the computer system 150, the computer vision system 134, and the memory 152 in FIG. 1) associated with the vehicle 100 may predict behavior of a recognized object based on a feature of the recognized object and a condition (for example, traffic, rain, or ice on a road) of an ambient environment.

Optionally, all recognized objects depend on behavior of each other. Therefore, all the recognized objects may be alternatively jointly considered to predict behavior of a single recognized object. The vehicle 100 can adjust the speed of the vehicle 100 based on the predicted behavior of the recognized object. In other words, the autonomous vehicle can determine, based on the predicted behavior of the object, that the vehicle needs to be adjusted to a stable status (for example, an adjustment operation may include acceleration, deceleration, or stop). In this process, another factor may also be considered to determine the speed of the vehicle 100, for example, a lateral location of the vehicle 100 on a road on which the vehicle 100 travels, a curvature of the road, and proximity between a static object and a dynamic object.

In addition to providing an instruction for adjusting the speed of the autonomous vehicle, the computing device may further provide an instruction for modifying a steering angle of the vehicle 100, so that the autonomous vehicle follows a given track and/or maintains a safe lateral distance and a safe longitudinal distance from an object (for example, a car in an adjacent lane of the road) near the autonomous vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

In a possible implementation, the vehicle 100 shown in FIG. 1 may be an autonomous vehicle. The following describes an autonomous driving system in detail.

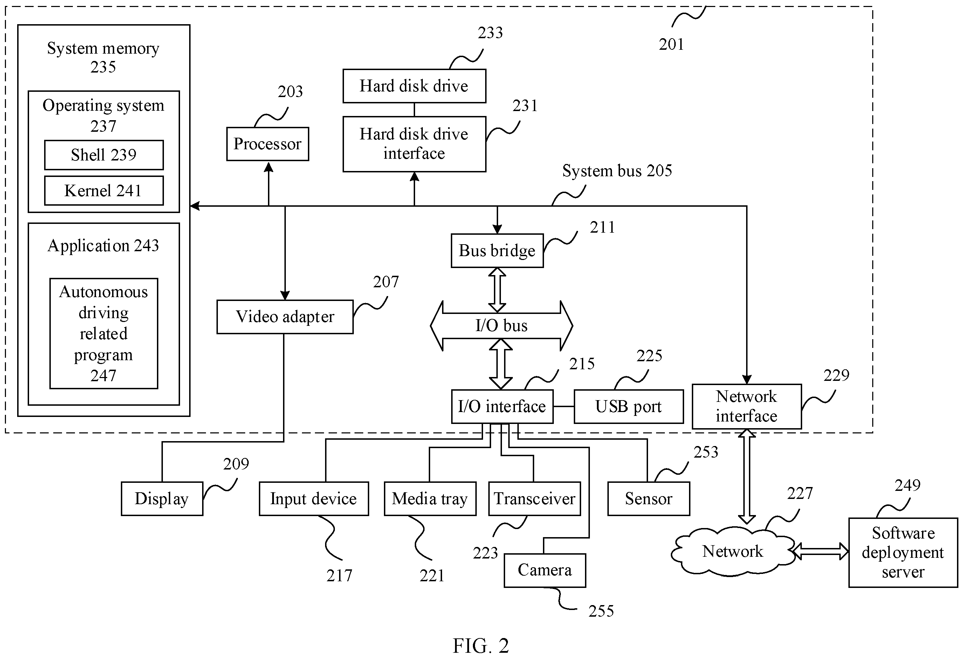

FIG. 2 is a schematic diagram of an autonomous driving system according to an embodiment of this application.

The autonomous driving system shown in FIG. 2 includes a computer system 201. The computer system 201 includes a processor 203, and the processor 203 is coupled to a system bus 205. The processor 203 may be one or more processors, and each processor may include one or more processor cores. A video adapter (video adapter) 207 may drive a display 209, and the display 209 is coupled to the system bus 205. The system bus 205 may be coupled to an input/output (I/O) bus 213 through a bus bridge 211, and an I/O interface 215 is coupled to the I/O bus. The I/O interface 215 communicates with a plurality of I/O devices, for example, an input device 217 (for example, a keyboard, a mouse, or a touchscreen) and a media tray (media tray) 221 (for example, a CD-ROM or a multimedia interface). A transceiver 223 may transmit and/or receive radio communication signals, and a camera 255 may capture static and dynamic digital video images. An interface connected to the I/O interface 215 may be a USB port 225.

The processor 203 may be any conventional processor, for example, a reduced instruction set computer (reduced instruction set computer, RISC) processor, a complex instruction set computer (complex set instruction computer, CISC) processor, or a combination thereof.

Optionally, the processor 203 may be a dedicated apparatus such as an application-specific integrated circuit (application-specific integrated circuit, ASIC), or the processor 203 may be a neural network processor or a combination of a neural network processor and the foregoing conventional processor.

Optionally, in embodiments described in this specification, the computer system 201 may be located away from an autonomous vehicle and may wirelessly communicate with the autonomous vehicle. In another aspect, some processes described in this specification are performed by a processor disposed in the autonomous vehicle, and others are performed by a remote processor, including performing an action required for performing single manipulation.

The computer system 201 may communicate with a software deployment server 249 through a network interface 229. The network interface 229 may be a hardware network interface, for example, a network interface card. A network 227 may be an external network, for example, Internet; or may be an internal network, for example, Ethernet or a virtual private network (virtual private network, VPN). Optionally, the network 227 may be alternatively a wireless network, for example, a Wi-Fi network or a cellular network.

As shown in FIG. 2, a hard disk drive interface is coupled to the system bus 205, a hardware drive interface 231 may be connected to a hard disk drive 233, and a system memory 235 is coupled to the system bus 205. Data running in the system memory 235 may include an operating system 237 and an application 243. The operating system 237 may include a shell (shell) 239 and a kernel (kernel) 241. The shell 239 is an interface between a user and the kernel (kernel) of the operating system. The shell may be at an outermost layer of the operating system. The shell may manage interaction between the user and the operating system, for example, wait for a user input, interpret the user input to the operating system, and process various output results of the operating system. The kernel 241 may include parts of the operating system that are used to manage a memory, a file, a peripheral, and a system resource. Directly interacting with hardware, the kernel of the operating system usually runs processes, provides inter-process communication, and provides CPU time slice management, interrupts, memory management, I/O management, and the like. The application 243 includes related programs for controlling autonomous driving of a car, for example, a program for managing interaction between an autonomous vehicle and an obstacle on a road, a program for controlling a route or a speed of an autonomous vehicle, and a program for controlling interaction between an autonomous vehicle and another autonomous vehicle on a road. The application 243 also exists in a system of the software deployment server 249. In an embodiment, when an autonomous driving related program 247 needs to be executed, the computer system 201 may download the application from the software deployment server 249.

For example, the application 243 may be alternatively an application used to perform autonomous driving to recognize driving behavior of another vehicle on a road.

For example, a sensor 253 may be associated with the computer system 201, and the sensor 253 may be configured to detect an ambient environment of the computer 201.

For example, the sensor 253 may detect an animal, a car, an obstacle, a crosswalk, and the like. Further, the sensor may detect an ambient environment of an object such as the animal, the car, the obstacle, or the crosswalk, for example, an ambient environment of the animal, for example, another animal appearing around the animal, weather conditions, and brightness of the ambient environment.

Optionally, if the computer 201 is located in an autonomous vehicle, the sensor may be a camera, an infrared sensor, a chemical detector, a microphone, or the like.

For example, in a driving scenario, the sensor 253 may be configured to detect a size or a location of an obstacle around the vehicle, to prevent the vehicle from colliding with the obstacle.

In an example, the computer system 150 shown in FIG. 1 may further receive information from or transfer information to another computer system. Alternatively, sensor data collected from the sensing system 120 of the vehicle 100 may be transferred to another computer to process the data.

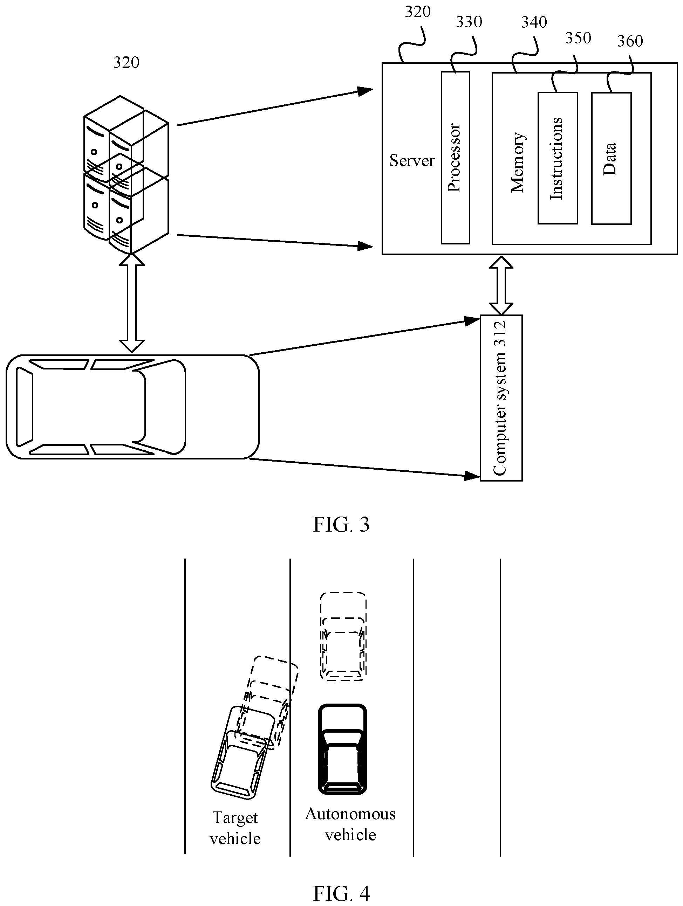

For example, as shown in FIG. 3, data from a computer system 312 may be transmitted through a network to a cloud-side server 320 for further processing. The network and an intermediate node may include various configurations and protocols, including Internet, World Wide Web, an intranet, a virtual private network, a wide area network, a local area network, a private network using a proprietary communication protocol of one or more companies, Ethernet, Wi-Fi, HTTP, and various combinations thereof. Such communication may be performed by any device capable of transmitting data to another computer and receiving data from another computer, for example, a modem and a wireless interface.

In an example, the server 320 may include a server with a plurality of computers, for example, a load balancing server group. To receive data from, process data of, and transmit data to the computer system 312, the server exchanges information with different nodes of the network. The server may be configured in a manner similar to that of the computer system 312, and includes a processor 330, a memory 340, instructions 350, and data 360.

For example, the data 360 of the server 320 may include information related to road conditions around a vehicle. For example, the server 320 may receive, detect, store, update, and transmit the information related to the road conditions of the vehicle.

For example, the information related to the road conditions around the vehicle includes information about another vehicle and an obstacle around the vehicle.

FIG. 4 is a schematic diagram of an application scenario of a vehicle driving behavior recognition method according to an embodiment of this application.

As shown in FIG. 4, a target vehicle may be another vehicle with dangerous vehicle driving behavior. For example, the dangerous vehicle driving behavior includes lane change and cut-in driving behavior. The lane change and cut-in driving behavior is behavior that another vehicle whose distance from an autonomous vehicle is within a certain range changes a lane and cuts into a lane at which the autonomous vehicle is located, or behavior that another vehicle whose distance from an autonomous vehicle is within a certain range overtakes the autonomous vehicle and changes a lane to cut into a lane in which the autonomous vehicle is located. The driving behavior may also be referred to as vehicle cut-in behavior. Because the distance is short and a reaction time is short, the autonomous vehicle needs to be able to determine and recognize such dangerous driving behavior in advance, to plan a safer driving path, and meet driving safety of the autonomous vehicle.

For example, the target vehicle is another vehicle with which the autonomous vehicle has a risk to collide. For example, the target vehicle may be alternatively another vehicle that is located in a lane on a left or right side of the lane in which the autonomous vehicle is located and that is to overtake the autonomous vehicle and change a lane to cut into the lane in which the autonomous vehicle is located.

It should be understood that the lane change and cut-in driving behavior is not limited to driving behavior of overtaking the autonomous vehicle and then cutting into the lane in which the autonomous vehicle is located, and may further include driving behavior that another vehicle in a lane on either side of the lane in which the autonomous vehicle is located suddenly cuts into the lane in which the autonomous vehicle is located. Any driving behavior of changing a lane and cutting into the lane in which the autonomous vehicle is located at a short distance from the autonomous vehicle belongs to the lane change and cut-in driving behavior.

For example, the road may be a highway environment, an urban road environment, or another road environment. This is not limited in this application.

Currently, cut-in behavior of another vehicle is typical dangerous vehicle driving behavior. The driving behavior is behavior that another vehicle whose distance from the autonomous vehicle is within a specific range overtakes the autonomous vehicle and after the overtaking, cuts into the lane in which the autonomous vehicle is located. Because the distance is short and a reaction time is short, the behavior is the most common dangerous driving behavior. With respect to a manually driven vehicle, a driver has abundant priori knowledge and inference ability and therefore can accurately recognize dangerous driving behavior of another vehicle on a road. However, with respect to an autonomous vehicle, how to accurately recognize dangerous driving behavior of another vehicle to effectively improve safety of the autonomous vehicle becomes an issue that urgently needs to be addressed.

In view of this, embodiments of this application provide a vehicle driving behavior recognition method and apparatus. Feedback data of a target vehicle that is on a road and that has a risk of colliding with an autonomous vehicle may be collected by a sensor of the autonomous vehicle, and a target feature of the target vehicle may be accurately obtained based on the feedback data of the target vehicle and high-precision map information. Further, a probability value of the target vehicle is obtained by using the target feature and a Bayesian network, where the probability value of the target vehicle may be used to indicate a probability of occurrence of a behavior status of the target vehicle, the behavior status may include lane change and cut-in driving behavior, and the lane change and cut-in driving behavior is driving behavior that the target vehicle changes a lane and cuts into a lane in which the autonomous vehicle is located. The autonomous vehicle can accurately recognize a behavior intention of the target vehicle for the lane change and cut-in driving behavior, thereby ensuring driving safety of the autonomous vehicle.

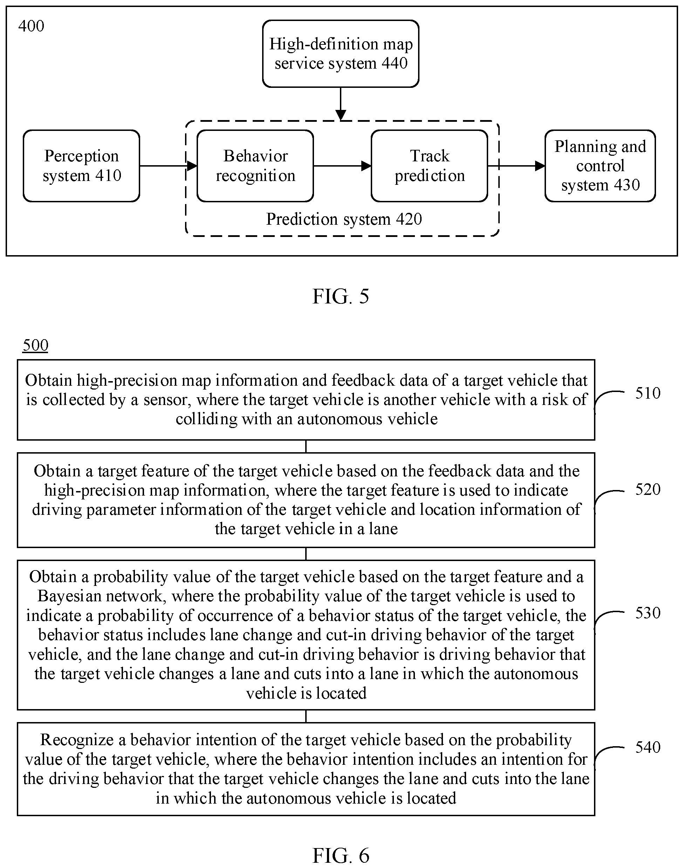

The following describes embodiments of this application in detail with reference to FIG. 5 to FIG. 10.

FIG. 5 is a schematic diagram of a system architecture to which a vehicle driving behavior recognition method is applicable according to an embodiment of this application. As shown in FIG. 5, a system 400 may include a perception system 410, a prediction system 420, a planning and control system 430, and a high-precision map service system 440.

The perception system 410 may be configured to sense information about a pavement and an ambient environment when an autonomous vehicle travels. For example, the perception system 410 can accurately sense the ambient environment of the autonomous vehicle by using a complex processing algorithm and a sensor device, for example, a laser radar, a camera, or a millimeter-wave radar.

The prediction system 420 may include behavior recognition and track prediction. The behavior recognition may be recognizing, by the autonomous vehicle, driving behavior of another vehicle traveling on a road. The track prediction may mean that the autonomous vehicle may recognize or predict a possible track of another vehicle in the future.

The planning and control system 430 is configured to plan a collision-free safe path based on a predicted travel track of another driving vehicle in the prediction system 420 and perception data output by the perception system 410, and control the autonomous vehicle to travel based on a specified route.

The high-precision map service system 440 may be configured to provide map information of a road for the prediction system 420, so that the prediction system 420 can recognize driving behavior of another vehicle on the road based on environmental perception information and high-precision map information.

It should be understood that the perception system 410 shown in FIG. 5 may be the sensing system 120 shown in FIG. 1, the prediction system 420 may be the vehicle-associated computing devices (the computer system 150, the computer vision system 134, and the memory 152 in FIG. 1) shown in FIG. 1, and may predict behavior of a recognized object based on a feature of the recognized object and a condition (for example, traffic, rain, or ice on a road) of an ambient environment, and the planning and control system 430 may be the control system 130 shown in FIG. 1.

The following describes in detail a vehicle driving behavior recognition method in an embodiment of this application with reference to FIG. 6. The method shown in FIG. 6 may be performed by the autonomous vehicle shown in FIG. 1 or the autonomous driving system shown in FIG. 2. The method shown in FIG. 6 includes step 510 to step 540. The following separately describes the steps in detail.

Step 510: Obtain high-precision map information and feedback data of a target vehicle that is collected by a sensor.

The target vehicle is another vehicle with a risk of colliding with the autonomous vehicle. For example, the target vehicle may be a vehicle with vehicle cut-in behavior.

For example, the feedback data of the target vehicle may be data that is related to the target vehicle and that is collected by one or more sensors (for example, a sensor device such as a laser radar, a camera, or a millimeter-wave radar) of the autonomous vehicle. For example, the feedback data may include location information, speed information, orientation angle information, and the like of the target vehicle.

Step 520: Obtain a target feature of the target vehicle based on the feedback data and the high-precision map information.

The target feature may be used to indicate driving parameter information of the target vehicle and location information of the target vehicle in a lane.

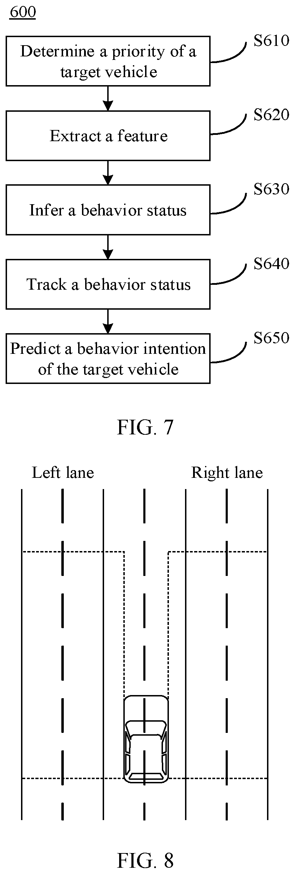

For example, for a specific process of obtaining the target feature of the target vehicle based on the feedback data and the high-precision map information, refer to step 620 subsequently shown in FIG. 7.

For example, the target feature may include a physical feature, a static interaction feature, and a dynamic interaction feature of the target vehicle. The physical feature may be driving information of the target vehicle that is obtained by a perception system. For example, the physical feature may include an orientation angle (for example, a heading angle) and a lateral speed of the target vehicle. The static interaction feature may be obtained relative information of the target vehicle and the road. For example, the static interaction feature may include a lane boundary distance. The dynamic interaction feature may be an obtained relative feature between the target vehicle and the autonomous vehicle. For example, the dynamic interaction feature may include a relative speed and a relative distance between the target vehicle and the autonomous vehicle.

Further, in this embodiment of this application, when the target feature of the target vehicle is obtained based on the high-precision map information and the feedback data of the target vehicle that is collected by the sensor, the target vehicle may be considered as a non-mass point. To be specific, contour information of the target vehicle may be obtained, and lane boundary distance information of the target vehicle may be determined by using the contour information of the target vehicle and the high-precision map information. In this way, a distance between the target vehicle and a boundary of a lane in which the autonomous vehicle is located can be accurately described, thereby improving precision of obtaining the target feature.

Optionally, in a possible implementation, the target feature may include the lane boundary distance information, the lane boundary distance information is information about a lateral distance between the target vehicle and a boundary of the lane in which the adjacent autonomous vehicle is located, and the obtaining a target feature of the target vehicle based on the feedback data and the high-precision map information may include: obtaining visible edge information of the target vehicle based on the feedback data, where the feedback data includes the contour information of the target vehicle; obtaining, based on the high-precision map information, lateral boundary line information of the lane in which the autonomous vehicle is located; and obtaining the lane boundary distance information based on the visible edge information and the lateral boundary line information.

Step 530: Obtain a probability value of the target vehicle based on the target feature and a Bayesian network.

The probability value of the target vehicle may be used to indicate a probability of occurrence of a behavior status of the target vehicle. The behavior status includes lane change and cut-in driving behavior of the target vehicle. The lane change and cut-in driving behavior may be driving behavior that the target vehicle changes a lane and cuts into the lane in which the autonomous vehicle is located.

It should be noted that, in this embodiment of this application, the probability value of the target vehicle may also be referred to as a probability value of occurrence of a behavior status of the target vehicle, that is, the probability value may indicate a probability of occurrence of specific driving behavior of the target vehicle. The behavior status of the target vehicle may include lane change and cut-in driving behavior of the target vehicle. The lane change and cut-in driving behavior is driving behavior that the target vehicle changes a lane and cuts into the lane in which the autonomous vehicle is located.

It should be understood that the lane change and cut-in driving behavior is not limited to driving behavior of overtaking the autonomous vehicle and then cutting into the lane in which the autonomous vehicle is located, and may further include driving behavior that another vehicle in a lane on either side of the lane in which the autonomous vehicle is located suddenly cuts into the lane in which the autonomous vehicle is located. Any driving behavior of changing a lane and cutting into the lane in which the autonomous vehicle is located at a short distance from the autonomous vehicle belongs to the lane change and cut-in driving behavior.

For example, for a specific process of obtaining the probability value of occurrence of the behavior status of the target vehicle based on the target feature and the Bayesian network, refer to step 630 and step 640 subsequently shown in FIG. 7.

It should be understood that the Bayesian network may perform posterior estimation on the behavior status of the target vehicle, that is, a posterior probability of occurrence of the behavior status of the target vehicle may be calculated based on the Bayesian network. A posterior probability of a random event or an uncertain event is a conditional probability, of occurrence of the random event or the uncertain event, that is obtained by considering and giving a related evidence or related data.

It should be further understood that, in this embodiment of this application, the obtained target feature of the target vehicle needs to be input to the Bayesian network, to predict the behavior status of the target vehicle and obtain the probability value of the target vehicle. However, a parameter input to the Bayesian network is a discrete parameter. Therefore, discretization processing needs to be performed on the obtained target feature of the target vehicle.

Further, in this embodiment of this application, a non-fixed threshold may be used. To be specific, discretization processing may be performed on the obtained target feature of the target vehicle by using the warning time determined based on the motion status of the autonomous vehicle, to obtain the target feature obtained after the discretization processing, thereby improving precision of a discrete description of the target feature.

Optionally, in a possible implementation, the recognition method further includes: performing discretization processing on the target feature based on a warning time to obtain a target feature obtained after the discretization processing, where the warning time is determined based on a motion status of the autonomous vehicle; and the obtaining a probability value of the target vehicle based on the target feature and a Bayesian network may include: obtaining the probability value of the target vehicle based on the target feature obtained after the discretization processing and the Bayesian network.

It should be noted that the motion status of the autonomous vehicle may be indicated by a speed parameter of the autonomous vehicle or an acceleration of the autonomous vehicle.

For example, when a speed of the autonomous vehicle is higher or the acceleration of the autonomous vehicle is higher, the warning time may be set to be longer, to ensure that the autonomous vehicle has sufficient time to recognize a behavior intention of another vehicle and adjust a planned path based on the behavior intention of the another vehicle in a timely manner.

Optionally, in this embodiment of this application, the Bayesian network may be a dynamic Bayesian network. To be specific, probability values of the target vehicle at different moments may be correlated with each other.

Further, in this embodiment of this application, to meet real-time performance of calculating a posterior probability of a behavior status of the target vehicle online by the Bayesian network, that is, to ensure that the autonomous vehicle can accurately recognize a behavior status of the target vehicle in a timely manner and adjust a planned path so that the autonomous vehicle travels safely, a simple Bayesian network, namely, a Bayesian network structure in which posterior probabilities of behavior statuses of the target vehicle at different moments are calculated independently, may be used, so that calculation efficiency of the Bayesian network can be effectively improved.

Optionally, in a possible implementation, probability values that are of the target vehicle at any two moments and that are obtained by using the Bayesian network are independent of each other.

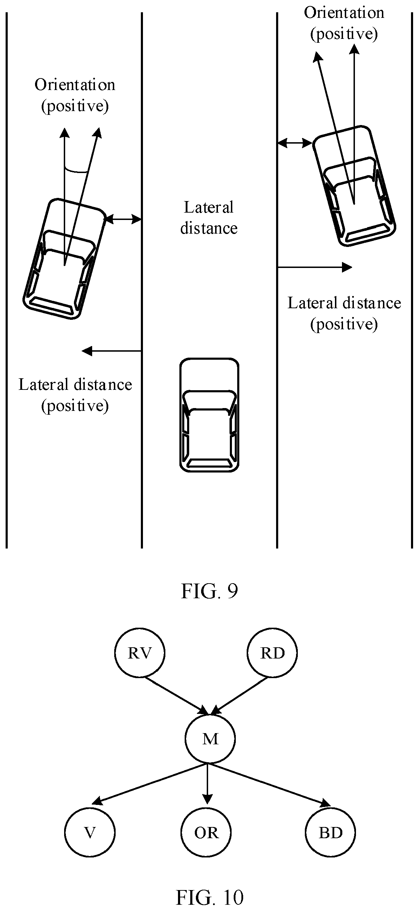

For example, for a structure of the Bayesian network provided in this embodiment of this application, refer to FIG. 10. In the Bayesian belief network, a first layer is a dynamic interaction feature layer, a second layer is a target vehicle behavior status layer, and a third layer is a physical feature and static interaction feature layer. In the Bayesian belief network, each feature is a network node.

Step 540: Recognize a behavior intention of the target vehicle based on the probability value of the target vehicle.

The behavior intention of the target vehicle includes an intention for the driving behavior that the target vehicle changes the lane and cuts into the lane in which the autonomous vehicle is located.

It should be understood that the recognizing a behavior intention of the target vehicle based on the probability value of the target vehicle may mean that, it may be determined, based on the probability value of the target vehicle, that the target vehicle is to have a behavior intention for the lane change and cut-in driving behavior at a current moment or a future moment. To be specific, recognizing the behavior intention of the target vehicle for the lane change and cut-in driving behavior means that, when the target vehicle is to perform or is performing the lane change and cut-in driving behavior, based on the probability value of the behavior status of the target vehicle, the autonomous vehicle may have priori knowledge and inference ability similar to that of a driver, and recognize the lane change and cut-in driving behavior of the target vehicle, thereby ensuring that the autonomous vehicle does not collide with the target vehicle in a planned travel path.

For example, driving behavior of the target vehicle may be predicted based on a probability value of occurrence of a behavior status of the target vehicle. For example, when the probability value is equal to 1 or close to 1, it indicates that the target vehicle has a behavior intention for lane change and cut-in behavior; or when the probability value is equal to 0 or close to 0, it indicates that the target vehicle has no behavior intention for lane change and cut-in driving behavior.

Further, in this embodiment of this application, fusion may be performed on probability values of the target vehicle at a plurality of different moments, to suppress a random change of a behavior status of the target vehicle caused by noise or the like, thereby improving robustness of recognition by the autonomous vehicle.

Optionally, in a possible implementation, the probability value of the target vehicle may be a fused probability value of the target vehicle, and the recognizing a behavior intention of the target vehicle based on the probability value of the target vehicle may include: fusing a probability value of the target vehicle at a current moment and a probability value of the target vehicle at a historical moment to obtain the fused probability value of the target vehicle, where the historical moment is at least any one moment earlier than the current moment; and recognizing the behavior intention of the target vehicle based on the fused probability value of the target vehicle.

In an example, the historical moment may be a previous moment earlier than the current moment.

In another example, the historical moment may be alternatively several consecutive moments earlier than the current moment or all moments earlier than the current moment. For example, the current moment may be a fifth moment. In this case, the historical moment may be several consecutive moments earlier than the fifth moment, for example, a first moment to a fourth moment, or the second moment to the fourth moment.

For example, fusion may be performed by using a DS evidence theory or a preset time window. For a specific process, refer to step 640 subsequently shown in FIG. 7.

In an example, fusion may be performed on the probability value of the target vehicle at the current moment and the probability value of the target vehicle at the historical moment by using the DS evidence theory, to obtain the fused probability value of the target vehicle.

In another example, the historical moment may be determined based on the preset time window; and fusion is performed on the probability value of the target vehicle at the current moment and the probability value of the target vehicle at the historical moment to obtain the fused probability value of the target vehicle.

In view of this, embodiments of this application provide a driving behavior recognition method and a vehicle driving behavior recognition apparatus. Feedback data of a target vehicle that is on a road and that has a risk of colliding with an autonomous vehicle may be collected by a sensor of the autonomous vehicle, and a target feature of the target vehicle may be accurately obtained based on the feedback data of the target vehicle and high-precision map information. Further, a probability value of the target vehicle is obtained by using the target feature and a Bayesian network, where the probability value of the target vehicle may be used to indicate a probability of occurrence of a behavior status of the target vehicle, the behavior status may include lane change and cut-in driving behavior, and the lane change and cut-in driving behavior is driving behavior that the target vehicle changes a lane and cuts into a lane in which the autonomous vehicle is located. The autonomous vehicle can accurately recognize a behavior intention of the target vehicle for the lane change and cut-in driving behavior, thereby ensuring driving safety of the autonomous vehicle.

FIG. 7 is a schematic flowchart of a vehicle driving behavior recognition method according to an embodiment of this application. The method may be performed by the autonomous vehicle shown in FIG. 1 or the autonomous driving system shown in FIG. 2. The method shown in FIG. 7 includes step 610 to step 650. The following separately describes the steps in detail.

Step 610: Determine a priority of a target vehicle.

For example, the autonomous vehicle may determine a priority of another vehicle in a target vehicle set based on obtained environmental perception information and high-precision map information, to perform vehicle behavior recognition. The another vehicle included in the target vehicle set is a vehicle with dangerous driving behavior with respect to the autonomous vehicle. For example, the another vehicle in the target vehicle set may be another vehicle whose from the autonomous vehicle is within a specific range and that is to change a lane and cut into a lane in which the autonomous vehicle is located, or another vehicle that overtakes the autonomous vehicle and changes a lane to cut into the lane in which the autonomous vehicle is located.

For example, target vehicles included in the target vehicle set may be classified into a high-priority target and a low-priority target according to a specific rule, and vehicle behavior recognition is preferentially performed on the high-priority target.

In an example, a priority of a target vehicle in the target vehicle set may be determined by using a lane constraint and a distance constraint.

For example, the lane constraint may be whether the target vehicle in the target vehicle set is located in a lane adjacent to or close to the autonomous vehicle. For example, as shown in FIG. 8, the lane constraint may be whether the target vehicle is located in a lane on a left or right side of the lane in which the autonomous vehicle is located.

For example, if there is another vehicle in the adjacent lane on the left or right side of the lane in which the autonomous vehicle is located, it is determined, by using the lane constraint, that the another vehicle in the adjacent lane on the left or right side of the lane in which the autonomous vehicle is located has a highest priority, and a behavior intention of the another vehicle in the lane is preferentially inferred; or if there is no another vehicle in the adjacent lane of the lane in which the autonomous vehicle is located, it may be determined, by using the lane constraint, that another vehicle in a lane close to the lane in which the autonomous vehicle is located has a highest priority, and a behavior intention of the another vehicle in the lane is preferentially inferred.

For example, the distance constraint may be whether a longitudinal distance between the target vehicle and the autonomous vehicle is less than a preset threshold $thr_R$, and the preset threshold of a longitudinal distance may be obtained by using Formula (1).

$$thr_R = V \bullet \Delta t \quad (1)$$

$thr_R$ indicates the preset threshold, V indicates a travel speed of the autonomous vehicle, and $\Delta t$ indicates a warning time, which may be a time used by the autonomous vehicle to recognize vehicle behavior of another vehicle.

It should be noted that the threshold of a longitudinal distance may be obtained based on the speed V of the autonomous vehicle and the specified warning time $\Delta t$. The warning time may be determined based on a motion status or a motion speed of the autonomous vehicle. For example, a higher motion speed of the autonomous vehicle indicates that a longer warning time may be set, so that the autonomous vehicle has sufficient time to recognize driving behavior of another vehicle, and the autonomous vehicle can travel safely.

Step 620: Extract a feature.

The extracting a feature may be: obtaining a feature during driving of the target vehicle.

For example, extracting a feature of the target vehicle may include a physical feature, a static interaction feature, and a dynamic interaction feature of the target vehicle. The physical feature may be driving information of the target vehicle that is obtained by a perception system. For example, the physical feature may include an orientation angle $\alpha$ (for example, a heading angle) and a lateral speed $V_L$ of the target vehicle. The static interaction feature may be obtained relative information of the target vehicle and a road. For example, the static interaction feature may include a distance $d_{bd}$ between the target vehicle and a lane boundary. The dynamic interaction feature may be an obtained relative feature between the target vehicle and the autonomous vehicle. For example, the dynamic interaction feature may include a relative speed $\Delta V$ and a relative distance $\Delta R$ between the target vehicle and the autonomous vehicle.

For example, the distance $d_{bd}$ between the target vehicle and the lane boundary may be a minimum distance between a visible edge of the target vehicle and the lane boundary.

For example, as shown in FIG. 9, it is assumed that a vehicle located in a middle lane is the autonomous vehicle, and a vehicle located in a left lane is the target vehicle. The autonomous vehicle may detect a rear visible edge and a rear visible edge of the target vehicle in the left lane, and therefore may obtain a lateral distance between a front lamp of the right visible edge of the target vehicle and the middle lane, a lateral distance between a rear-right lamp of the rear visible side of the target vehicle and the middle lane, and a lateral distance between a rear-left lamp of the rear visible side of the target vehicle and the middle lane. In this case, lane boundary distance information, namely, the distance between the target vehicle and the lane boundary, may be a smallest one of the foregoing three lateral distances.

Detailed calculation steps are as follows:

Fields of view (Fields of view, FOVs) of the target vehicle, namely, a maximum azimuth and a minimum azimuth of the target vehicle relative to a laser radar of the autonomous vehicle, and outer envelope vertices corresponding to the maximum azimuth and the minimum azimuth are calculated based on an outer envelope vertex set of the target vehicle, and the two outer envelope vertices are respectively denoted as $V_{max} = (x_{imax}, y_{imax})$ and $V_{min} = (x_{imin}, y_{imin})$, where $i_{max}$ = argmax($atan2(y_i, x_i)$), $i_{min}$ = arg min($atan2(y_i, x_i)$), $V_{max}$ indicates an outer envelope vertex corresponding to the maximum azimuth, $V_{min}$ indicates an outer envelope vertex corresponding to the minimum azimuth, $i_{max}$ and $i_{min}$ are indexes in the vertex set Q that correspond to $V_{max}$ and $V_{min}$ respectively, and arg max( ) indicates an operation of finding an index corresponding to a maximum value. A division line between a visible edge and an invisible edge of the target vehicle is determined based on the vertices $V_{max}$ and $V_{min}$, at two ends, that correspond to the FOV of the target vehicle, where

$V_{max}$ and $V_{min}$ are in the division line, and a division line equation is shown in Formula (2).

$$y = kx + b \quad (2)$$

$k$ and $b$ indicate a slope and an intercept of a straight line equation respectively, and may be obtained by using the two vertices $V_{max}$ and $V_{min}$ of the division line. A visible edge in an outer envelope of the target vehicle may be determined based on the division line equation, and an endpoint of the visible edge satisfies Formula (3).

$$\left(y_i - kx_i - b\right)\left(-b\right) \geq 0 \quad (3)$$

$x_i$ and $y_i$ may indicate coordinates of the $i^{th}$ vertex $Q_i$. A vertex of the visible edge that satisfies Formula (3) is denoted as $Q_i$, where $i = m_1, m_2, ... m_l$, and $l$ indicates a quantity of vertices of the visible edge.

A minimum value of a distance between the visible edge and the lane boundary may be calculated based on Formula (4), where the value is a distance BD between the target vehicle and the lane boundary.

$$d_{bd} = \min_i d\left(P_i, L\right) \quad (4)$$

$d(P_i, L)$ indicates a longitudinal distance between a point $P_i$ and a curve $L$, and L indicates a boundary line of the lane in which the autonomous vehicle is located, and may be provided by a high-precision map service system.

The distance $d_{bd}$ between the target vehicle and the lane boundary may be obtained by using the foregoing steps.

In this embodiment of this application, when the distance between the target vehicle and the lane boundary is calculated, the target vehicle is not considered as a mass point; instead, the outer envelope vertices of the target vehicle are obtained, so that the visible edge of the target vehicle is extracted based on the contour information of the distributed target vehicle in a laser point cloud, and the distance between the target vehicle and the lane boundary is calculated by using the visible edge. In this way, the distance between the distributed target vehicle and the lane boundary is more accurately described, and precision and accuracy of obtaining a feature can be improved.

For example, the dynamic interaction feature may include the relative speed $\Delta V$ and the relative distance AR between the target vehicle and the autonomous vehicle, where the relative speed and the relative distance may be a longitudinal speed and a longitudinal distance in a lane coordinate system.

For example, the dynamic interaction feature may be obtained by using Formula (5) and Formula (6).

$$\Delta V = V_{slx} - V_{slx\_ego} \quad (5)$$

$$\Delta R = x_{sl} - x_{sl\_ego} \quad (6)$$

$V_{slx}$ and $V_{slx-ego}$ indicate longitudinal speeds of the target vehicle and the autonomous vehicle in the lane coordinate system respectively, and $x_{sl}$ and $x_{sl\_ego}$ indicate vertical coordinates of the target vehicle and the autonomous vehicle in the lane coordinate system respectively.

The feature may be extracted by using the foregoing steps. To be specific, the physical feature, the static interaction feature, and the dynamic interaction feature of the target vehicle may be obtained. The foregoing obtained features of the target vehicle are all continuous features. Adaptive discretization is performed on the obtained continuous features below.

It should be noted that the discretization processing on the target feature below is merely an example, and a quantity of values obtained by performing discretization processing on the target feature is not limited in this application.

It should be understood that, in this embodiment of this application, the obtained feature of the target vehicle needs to be subsequently input to the Bayesian belief network, to predict a driving state of the target vehicle. However, a parameter input to the Bayesian belief network is a discrete parameter. Therefore, discretization processing needs to be performed on the obtained feature of the target vehicle.

For example, discretization processing may be performed on a lateral speed component $V_L$ of the target vehicle in the lane coordinate system based on a lateral acceleration of the target vehicle and the warning time. Refer to Formula (7) to Formula (9).

$$V = \begin{cases} 0, V_L \leq V_{L1} \\ 1, V_{L2} > V_L > V_{L1} \\ 2, V_L > V_{L2} \end{cases} \quad (7)$$

$$V_{L1} = a_L \bullet T_{w1} \quad (8)$$

$$V_{L2} = a_L \bullet T_{w2} \quad (9)$$

V may indicate a discrete lateral speed feature of the target vehicle, $V_{L1}$ and $V_{L2}$ may indicate lateral speed thresholds corresponding to different warning times, $a_L$ may indicate the lateral acceleration of the target vehicle, and $T_{w1}$ and $T_{w2}$ may indicate warning times at two different levels.

It should be noted that the foregoing warning time may be a dynamic value. To be specific, the warning time may be determined based on a motion status or a motion speed of the autonomous vehicle.

For example, discretization processing may be performed on an orientation angle $\alpha$ of the target vehicle based on a velocity of the target vehicle at the orientation angle and the warning time. Refer to Formula (10) to Formula (12).

As shown in FIG. 9, it may be assumed that, with respect to the vehicle in the left lane, a rightward direction of a vehicle orientation relative to a lane orientation is a positive direction, and a leftward direction of the vehicle orientation relative to the lane orientation is a negative direction; and with respect to a vehicle in a right lane, a leftward direction of a vehicle orientation relative to a lane orientation is a positive direction, and a rightward direction of the vehicle orientation relative to the lane orientation is a negative direction

$$OR = \begin{cases} 0, \alpha \leq \alpha_1 \\ 1, \alpha_2 > \alpha > \alpha_1 \\ 2, \alpha > \alpha_2 \end{cases} \quad (10)$$

$$\alpha_1 = \omega \cdot (T - T_{\omega 1}) \quad (11)$$

$$\alpha_2 = \omega \cdot (T - T_{\omega 2}) \quad (12)$$

OR may indicate a discrete orientation feature of the target vehicle, $\omega$ may indicate the angular velocity, $\alpha_1$, and $\alpha_2$ may indicate orientation thresholds corresponding to different warning times, $T$ may indicate duration required for a lane change, and $T_{w1}$ and $T_{w2}$ may indicate warning times at two different levels.

It should be noted that the foregoing warning time may be a dynamic value. To be specific, the warning time may be determined based on a motion status or a motion speed of the autonomous vehicle.

For example, discretization processing may be performed on the distance $d_{bd}$ between the target vehicle and the lane boundary based on the lateral speed of the target vehicle and the early warning time. Refer to Formula (13) to Formula (15).

$$BD = \begin{cases} 0, d_{bd} > d_1 \\ 1, d_1 > d_{bd} > d_2 \\ 2, d_{bd} < d_2 \end{cases} \quad (13)$$

$$d_1 = V_L \cdot T - W / 2 \quad (14)$$

$$d_2 = V_L \cdot T_w - W / 2 \quad (15)$$

*BD* may indicate a discrete lane boundary distance feature of the target vehicle, $V_L$ may indicate the lateral speed, *T* may indicate the duration required for the lane change, $T_w$ may indicate the early warning time, *W* may indicate a lane width, and $d_1$ and $d_2$ may indicate different lane boundary distance thresholds.

For example, discretization processing may be performed on a longitudinal relative speed based on the warning time and a longitudinal relative distance between the target vehicle and the autonomous vehicle. Refer to Formula (16) to Formula (18).

$$RV = \begin{cases} 0, \Delta V \leq V_1 \\ 1, V_2 > \Delta V > V_1 \\ 2, \Delta V > V_2 \end{cases} \quad (16)$$

$$V_1 = \frac{\Delta d}{T} \bullet \frac{T_{w1}}{T} \quad (17)$$

$$V_2 = \frac{\Delta d}{T} \bullet \frac{T_{w2}}{T} \quad (18)$$

*RV* may indicate a discrete longitudinal relative speed feature of the target vehicle, $V_1$ and $V_2$ may indicate relative speed thresholds corresponding to different warning times, $\Delta d$ may indicate a relative distance between the target vehicle and the autonomous vehicle at a current moment, *T* may indicate the duration required for the lane change, and $T_{w1}$ and $T_{w2}$ may indicate warning times at two different levels.

It should be noted that the foregoing warning time may be a dynamic value. To be specific, the warning time may be determined based on a motion status or a motion speed of the autonomous vehicle.

For example, discretization processing may be performed on a longitudinal relative distance $\Delta R$ based on the warning time and a relative speed $\Delta V$ between the target vehicle and the autonomous vehicle. Refer to Formula (19) and Formula (20).

$$RD = \begin{cases} 0, \Delta R \leq \Delta d_1 \\ 1, \Delta d_2 \geq \Delta R > \Delta d_1 \\ 2, \Delta d_3 \geq \Delta R > \Delta d_2 \\ 3, \Delta R > \Delta d_3 \end{cases} \quad (19)$$

$$\Delta d_i = \Delta V \cdot T_{wi}, i = 1, 2, 3 \quad (20)$$

*RD* may indicate a discrete longitudinal relative distance feature of the target vehicle, and $\Delta d_i$ may indicate a relative distance threshold when the warning time is $T_{wi}$.

Discretization processing may be performed on the obtained continuous feature of the target vehicle by using the foregoing steps, to obtain a discrete feature of the target vehicle. The discrete feature of the target vehicle is input to the Bayesian belief network to predict driving behavior of the target vehicle. To be specific, a probability of the target vehicle changing a lane or not changing a lane may be predicted.

Step 630: Infer a behavior status of the target vehicle.

For example, the discrete feature may be input to the Bayesian belief network to infer a behavior status of the target vehicle.

For example, for a structure of the Bayesian belief network provided in this embodiment of this application, refer to FIG. 10. In the Bayesian belief network, a first layer is a dynamic interaction feature layer, a second layer is a target vehicle behavior status layer, and a third layer is a physical feature and static interaction feature layer. In the Bayesian belief network, each feature is a network node. RV indicates a discrete relative speed feature between the target vehicle and the autonomous vehicle. RD indicates a discrete relative distance feature between the target vehicle and the autonomous vehicle. M indicates a probability value of a behavior status of the target vehicle. V indicates a speed feature of the target vehicle. OR indicates an orientation of the target vehicle. BD indicates a discrete lane boundary distance feature, namely, a discrete distance feature between the target vehicle and a boundary of the lane in which the autonomous vehicle is located. Based on the Bayesian belief network shown in FIG. 10, a posterior probability of a behavior status of the target vehicle may be obtained with reference to Formula (21) to Formula (23).

$$P\left(M_t \middle| C_t, D_t\right) = \frac{P\left(M_t, C_t, D_t\right)}{P\left(C_t, D_t\right)} \propto P\left(M_t, C_t, D_t\right) \quad (21)$$

$$P\left(M_t, C_t, D_t\right) = P\left(RV_t\right)P\left(RD_t\right)P\left(M_t \middle| RV_t, RD_t\right)P\left(V_t \middle| M_t\right)P\left(BD_t \middle| M_t\right)P\left(OR_t \middle| M\right) \quad (22)$$

$$P\left(M_t{=}i \middle| C_t, D_t\right) = \frac{P\left(M_t = i, C_t, D_t\right)}{\sum_{M_t} P\left(M_t, C_t, D_t\right)}, i = 0, 1 \quad (23)$$

$t$ may indicate a moment, $C_t$ may indicate a dynamic interaction feature vector at a moment t, $D_t$ may indicate a physical feature and static interaction feature vector at the moment t, and $M_t$ may indicate a behavior status of the target vehicle at the moment t, where the behavior status may include driving behavior of the target vehicle changing a lane, or driving behavior of the target vehicle not changing a lane.

It should be understood that the posterior probability of the behavior status of the target vehicle is the probability value of the target vehicle shown in FIG. 6.

For example, when $M_t = 1$ , it may indicate that the target vehicle has behavior of cutting into the lane in which the autonomous vehicle is located; or when $M_t = 0$ , it may indicate that the target vehicle does not have behavior of cutting into the lane in which the autonomous vehicle is located.

$P(RV_t)$ may indicate a priori probability of a longitudinal relative speed feature, to be specific, when the longitudinal relative speed is $RV_t$, a probability that the target vehicle has behavior of cutting into the lane in which the autonomous vehicle is located and a probability that the target vehicle does not have behavior of cutting into the lane in which the autonomous vehicle is located. Likewise, $P(RD_t)$ may indicate a priori probability of a longitudinal relative distance feature, to be specific, when the longitudinal relative distance is $RD_t$, a probability that the target vehicle has behavior of cutting into the lane in which the autonomous vehicle is located and a probability that the target vehicle does not have behavior of cutting into the lane in which the autonomous vehicle is located.

$P(M_t|RV_t, RD_t)$, $P(V_t|M_t)$, $P(BD_t|M_t)$, and $P(OR_t|M_t)$ indicate conditional probabilities, and these probabilities may be separately obtained through offline parameter learning.

For example, parameter learning is to determine a network parameter when a network structure is known. When a network input feature is a discrete feature, probability distribution corresponding to nodes in a network may conform to binomial distribution or polynomial distribution. Under the condition of a complete dataset, a maximum likelihood estimation or Bayesian estimation method is usually used for parameter learning, to obtain a conditional probability table or a priori probability of each node.

For example, the conditional probability table or the priori probability of each node may be obtained based on Formula (24) to Formula (26).

$$P\left(x = i\right) = \frac{\sum_{n=1}^{n=N} I\left(x = i\right)}{N} \quad (24)$$

$$I\left(x = i\right) = \begin{cases} 1, if x = i \\ 0, else \end{cases} \quad (25)$$

$$P\left(x = j \middle| y = i\right) = \frac{\sum_{n=1}^{n=N} I\left(x = j, y = i\right)}{\sum_{n=1}^{n=N} I\left(y = i\right)} \quad (26)$$

$.x$ indicates a feature random variable, N indicates a total quantity of samples, and $P(x = j|y = i)$ indicates probability distribution of the feature random variable $x$ under a feature random variable condition of $y = i$ .

In this embodiment of this application, the Bayesian belief network configured to infer a posterior probability of a behavior status of the target vehicle infers a behavior status of the target vehicle at a current moment based on a feature of the target vehicle at the current moment. That is, the Bayesian belief network provided in this embodiment of this application is independent at different moments. A dynamic Bayesian belief network that is correlated at all moments is not used, so that a posterior probability of a behavior status of the target vehicle can be efficiently calculated, and calculation efficiency of the Bayesian belief network is improved.

Step 640: Track a behavior status.

For example, in this embodiment of this application, fusion may be performed on probabilities of behavior statuses of the target vehicle at different moments by using a DS evidence theory (Dempster-Shafer evidence theory, DSET), to effectively eliminate a fluctuation and a change of the behavior status of the target vehicle caused by noise, and improve system robustness of the autonomous vehicle.

For example, fusion may be performed on behavior statuses of the target vehicle at a moment t-1 and a moment t with reference to Formula (27) to Formula (30).

$$P_f\left(M_t=1\right)=\frac{1}{1-K}P\left(M_t=1\right)\bullet P_f\left(M_{t-1}=1\right) \quad (27)$$

$$P_f\left(M_t=0\right)=\frac{1}{1-K}P\left(M_t=0\right)\bullet P_f\left(M_{t-1}=0\right) \quad (28)$$

$$1-K=P\left(M_t=1\right)\bullet P_f\left(M_{t-1}=1\right)+P\left(M_t=0\right)\bullet P_f\left(M_{t-1}=0\right) \quad (29)$$

$P_f(M_t=1)$ and $P_f(M_t=0)$ indicate probabilities, output by the DS evidence theory, that the behavior status of the target vehicle is $M_t=1$ and that the behavior status of the target vehicle is $M_t=0$ respectively, 1-$K$ indicates a normalization factor, $P_f(\ )$ indicates a fusion probability output by the DS evidence theory, and $P(\ )$ indicates a probability, output by the Bayesian belief network, of the behavior status of the target vehicle.

For example, when the DS evidence theory is used, a maximum probability (for example, 0.9) and a minimum probability (for example, 0.1) of a behavior status of the target vehicle may be set in this application.

$$P_f\left(M_t=i\right)=\begin{cases}P_{\max},ifP_f\left(M_t=i\right)>P_{\max}\\P_f\left(M_t=i\right),ifP_{\min}<P_f\left(M_{t-1}=i\right)<P_{\max}\\P_{\min},ifP_f\left(M_t=i\right)<P_{\min}\end{cases} \quad (30)$$

In the foregoing descriptions, fusion is performed on probabilities of behavior statuses of the target vehicle at different moments by using the DS evidence theory, to effectively eliminate a fluctuation and a change of a behavior status of the target vehicle caused by noise, and improve system robustness of the autonomous vehicle.

It should be noted that the probability of the behavior status of the target vehicle is the probability value of the target vehicle shown in FIG. 6.

Optionally, in a possible implementation, the probability of the behavior status of the target vehicle may be alternatively calculated by using a specific time window, to determine a fusion probability (for example, a weighted average) at a current moment.

$$P_f\left(M_t=1\right)=\sum_{i=0,1,2...M}w_iP\left(M_{t-i}=1\right) \quad (31)$$

$$P_f\left(M_t=0\right)=\sum_{i=0,1,2...M}w_iP\left(M_{t-i}=0\right) \quad (32)$$

$w_i$ indicates a weight corresponding to a probability at a moment $t$-$i$, and M indicates a time window.

For example, the weight may be a weighted average or an exponentially decreasing weight. This is not limited in this application.

In this embodiment of this application, fusion may be performed on probabilities of behavior statuses of the target vehicle at different moments by using a specific time window, to effectively eliminate a fluctuation and a change of the behavior status of the target vehicle caused by noise, and improve system robustness of the autonomous vehicle.

Step S650: Predict a behavior intention of the target vehicle.

For example, the autonomous vehicle may predict driving behavior of the target vehicle based on the fusion probability obtained in step 640. For example, when the fusion probability is equal to 1 or close to 1, it indicates that the target vehicle has a behavior intention for cutting into the lane in which the autonomous vehicle is located; or when the fusion probability is equal to 0 or close to 0, it indicates that the target vehicle has no behavior intention for cutting into the lane in which the autonomous vehicle is located.

Further, the autonomous vehicle may adjust a planned path based on the driving behavior of the target vehicle in a timely manner, to avoid collision between the autonomous vehicle and the target vehicle, and ensure driving safety of the autonomous vehicle.

In this embodiment of this application, priorities of target vehicles may be determined based on feedback data of the target vehicles collected by a sensor and obtained high-precision map information, and then a target feature of a high-priority target vehicle is extracted, and a warning time is introduced to perform adaptive discretization on the target feature of the target vehicle; a simple three-layer Bayesian belief network is designed based on a causal relationship between each node and a behavior status of the target vehicle; and a behavior status of the target vehicle is actually inferred by using the Bayesian network; and finally, fusion may be performed on probability values of behavior statuses of the target vehicle at different moments to track a behavior status of the target vehicle, thereby improving robustness of recognition by the autonomous vehicle.

It should be understood that the foregoing example descriptions are intended to help a person skilled in the art understand embodiments of this application, but are not intended to limit embodiments of this application to the specific values or specific scenarios illustrated. A person skilled in the art clearly can make various equivalent modifications or changes based on the examples described above, and such modifications or changes also fall within the scope of embodiments of this application.

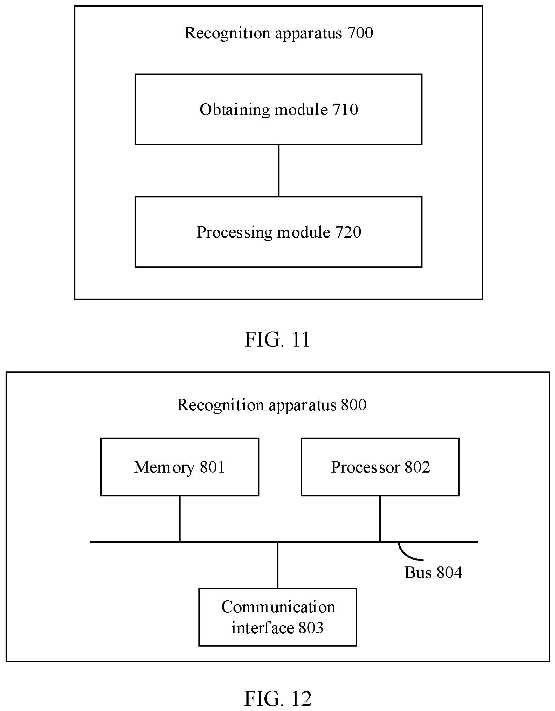

The foregoing describes in detail the vehicle driving behavior recognition method provided in embodiments of this application with reference to FIG. 1 to FIG. 10. The following describes in detail apparatus embodiments of this application with reference to FIG. 11 to FIG. 12. It should be understood that the vehicle driving behavior recognition apparatus in embodiments of this application may perform the methods in the foregoing embodiments of this application. For specific operating processes of the following products, refer to corresponding processes in the foregoing method embodiments.

FIG. 11 is a schematic block diagram of a vehicle driving behavior recognition apparatus according to an embodiment of this application.

It should be understood that the recognition apparatus 700 shown in FIG. 11 is merely an example, and the apparatus in this embodiment of this application may alternatively include another module or unit. It should be understood that the recognition apparatus 700 can perform the steps in the recognition method in FIG. 6 or FIG. 7. To avoid repetition, details are not described herein again.

As shown in FIG. 11, the recognition apparatus 700 may include an obtaining module 710 and a processing module 720. The obtaining module 710 is configured to obtain high-precision map information and feedback data of a target vehicle that is collected by a sensor, where the target vehicle is another vehicle with a risk of colliding with an autonomous vehicle. The processing module 720 is configured to: obtain a target feature of the target vehicle based on the feedback data and the high-precision map information, where the target feature is used to indicate driving parameter information of the target vehicle and location information of the target vehicle in a lane; obtain a probability value of the target vehicle based on the target feature and a Bayesian network, where the probability value of the target vehicle is used to indicate a probability of occurrence of a behavior status of the target vehicle, the behavior status includes lane change and cut-in driving behavior of the target vehicle, and the lane change and cut-in driving behavior is driving behavior that the target vehicle changes a lane and cuts into a lane in which the autonomous vehicle is located; and recognize a behavior intention of the target vehicle based on the probability value of the target vehicle, where the behavior intention includes an intention for the driving behavior that the target vehicle changes the lane and cuts into the lane in which the autonomous vehicle is located.

Optionally, in a possible implementation, the target feature includes lane boundary distance information, the lane boundary distance information is information about a lateral distance between the target vehicle and a boundary of the lane in which the adjacent autonomous vehicle is located, and the processing module 720 is specifically configured to:

obtain visible edge information of the target vehicle based on the feedback data, where the feedback data includes contour information of the target vehicle; obtain, based on the high-precision map information, lateral boundary line information of the lane in which the autonomous vehicle is located; and obtain the lane boundary distance information based on the visible edge information and the lateral boundary line information.

Optionally, in a possible implementation, the processing module 720 is further configured to:

perform discretization processing on the target feature based on a warning time to obtain a target feature obtained after the discretization processing, where the warning time is determined based on a motion status of the autonomous vehicle; and
the processing module 720 is specifically configured to:
obtain the probability value of the target vehicle based on the target feature obtained after the discretization processing and the Bayesian network.

Optionally, in a possible implementation, probability values that are of the target vehicle at any two moments and that are obtained by using the Bayesian network are independent of each other.

Optionally, in a possible implementation, the probability value of the target vehicle is a fused probability value of the target vehicle, and the processing module 720 is specifically configured to:

fuse a probability value of the target vehicle at a current moment and a probability value of the target vehicle at a historical moment to obtain the fused probability value of the target vehicle, where the historical moment is at least any one moment earlier than the current moment; and
recognize the behavior intention of the target vehicle based on the fused probability value of the target vehicle.

Optionally, in a possible implementation, the processing module 720 is specifically configured to:
fuse the probability value of the target vehicle at the current moment and the probability value of the target vehicle at the historical moment by using a DS evidence theory, to obtain the fused probability value of the target vehicle.

Optionally, in a possible implementation, the processing module 720 is specifically configured to:

determine the historical moment based on a preset time window; and
fuse the probability value of the target vehicle at the current moment and the probability value of the target vehicle at the historical moment to obtain the fused probability value of the target vehicle.

It should be understood that the recognition apparatus 700 herein is embodied in a form of a functional unit. The term "module" herein may be implemented in a form of software and/or hardware. This is not specifically limited.

For example, the "module" may be a software program, a hardware circuit, or a combination thereof for implementing the foregoing functions. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the examples described in embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

FIG. 12 is a schematic block diagram of a vehicle driving behavior recognition apparatus according to an embodiment of this application.

The recognition apparatus 800 shown in FIG. 12 includes a memory 801, a processor 802, a communication interface 803, and a bus 804. The memory 801, the processor 802, and the communication interface 803 are communicatively connected to each other by using the bus 804.

The memory 801 may be a read-only memory (read-only memory, ROM), a static storage device, a dynamic storage device, or a random access memory (random access memory, RAM). The memory 801 may store a program. When the program stored in the memory 801 is executed by the processor 802, the processor 802 is configured to perform the steps of the vehicle driving behavior recognition method in embodiments of this application. For example, the processor 802 may perform the steps in the embodiment shown in FIG. 6 or FIG. 7.

The processor 802 may be a general-purpose central processing unit (central processing unit, CPU), a microprocessor, an application-specific integrated circuit (application-specific integrated circuit, ASIC), or one or more integrated circuits, and is configured to execute a related program, to implement the vehicle driving behavior recognition method in the method embodiments of this application.

The processor 802 may alternatively be an integrated circuit chip and has a signal processing capability. In an implementation process, the steps of the vehicle driving behavior recognition method in embodiments of this application may be performed by using an integrated logic circuit of hardware in the processor 802 or instructions in a form of software.

The processor 802 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, a discrete hardware component, or the like. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and performs, in combination with hardware of the processor 802, functions that need to be performed by the units included in an autonomous vehicle behavior planning apparatus in embodiments of this application, or performs the vehicle driving behavior recognition method in embodiments of this application. For example, the processor 802 may perform the steps/functions in the embodiment shown in FIG. 6 or FIG. 7.

The communication interface 803 may use a transceiver apparatus, for example, but not limited to, a transceiver, to implement communication between the recognition apparatus 800 and another device or a communication network.

The bus 804 may include a channel for transmitting information between the components (for example, the memory 801, the processor 802, and the communication interface 803) of the recognition apparatus 800.

It should be noted that, although only the memory, the processor, and the communication interface are shown in the recognition apparatus 800, in a specific implementation process, a person skilled in the art should understand that the recognition apparatus 800 may further include other devices required for implementing proper operating. In addition, according to a specific requirement, a person skilled in the art should understand that the recognition apparatus 800 may further include a hardware device for implementing another additional function. In addition, a person skilled in the art should understand that the recognition apparatus 800 may alternatively include only a device required for implementing this embodiment of this application, and does not need to include all the devices shown in FIG. 12.

It should be understood that the recognition apparatus shown in this embodiment of this application may be a vehicle-mounted device in an autonomous vehicle, or may be a chip disposed in a vehicle-mounted device.

An embodiment of this application further provides an autonomous vehicle. The autonomous vehicle includes a vehicle driving behavior recognition apparatus for performing the foregoing method embodiments.

An embodiment of this application further provides a chip. The chip includes a transceiver unit and a processing unit. The transceiver unit may be an input/output circuit or a communication interface. The processing unit is a processor, a microprocessor, or an integrated circuit integrated on the chip. The chip may perform the vehicle driving behavior recognition method in the foregoing method embodiments.

An embodiment of this application further provides a computer-readable storage medium. The computer-readable storage medium stores instructions. When the instructions are executed, the vehicle driving behavior recognition method in the foregoing method embodiments is performed.

An embodiment of this application further provides a computer program product including instructions. When the instructions are executed, the vehicle driving behavior recognition method in the foregoing method embodiments is performed.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitation, many forms of random access memories (random access memories, RAMs) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent the following three cases: Only A exists, both A and B exist, and only B exists. A and B may be singular or plural. In addition, the character "/" in this specification generally indicates an "or" relationship between the associated objects, but may also indicate an "and/or" relationship. For details, refer to a context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, and c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, and each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A vehicle driving behavior recognition method, comprising:

    obtaining high-precision map information and feedback data of a target vehicle that is collected by a sensor, wherein the target vehicle is another vehicle with which an autonomous vehicle has a risk to collide;
    obtaining a target feature of the target vehicle based on the feedback data and the high-precision map information, wherein the target feature is used to indicate driving parameter information of the target vehicle and location information of the target vehicle in a lane;
    obtaining a probability value of the target vehicle based on the target feature and a Bayesian network, wherein the probability value of the target vehicle is used to indicate a probability of occurrence of a behavior status of the target vehicle, the behavior status comprises lane change and cut-in driving behavior of the target vehicle, and the lane change and cut-in driving behavior is driving behavior that the target vehicle changes a lane and cuts into a lane in which the autonomous vehicle is located; and
    recognizing a behavior intention of the target vehicle based on the probability value of the target vehicle, wherein the behavior intention comprises an intention for the driving behavior that the target vehicle changes the lane and cuts into the lane in which the autonomous vehicle is located.

2. The recognition method according to claim 1, wherein the target feature comprises lane boundary distance information, the lane boundary distance information is information about a lateral distance between the target vehicle and a boundary of the lane in which the adjacent autonomous vehicle is located, and the obtaining a target feature of the target vehicle based on the feedback data and the high-precision map information comprises:

    obtaining visible edge information of the target vehicle based on the feedback data, wherein the feedback data comprises contour information of the target vehicle;
    obtaining, based on the high-precision map information, lateral boundary line information of the lane in which the autonomous vehicle is located; and
    obtaining the lane boundary distance information based on the visible edge information and the lateral boundary line information.

3. The recognition method according to claim 1 or 2, further comprising:

    performing discretization processing on the target feature based on a warning time, to obtain a target feature obtained after the discretization processing, wherein the warning time is determined based on a motion status of the autonomous vehicle; and
    the obtaining a probability value of the target vehicle based on the target feature and a Bayesian network comprises:
    obtaining the probability value of the target vehicle based on the target feature obtained after the discretization processing and the Bayesian network.

4. The recognition method according to any one of claims 1 to 3, wherein probability values that are of the target vehicle at any two moments and that are obtained by using the Bayesian network are independent of each other.

5. The recognition method according to claim 4, wherein the probability value of the target vehicle is a fused probability value of the target vehicle, and the recognizing a behavior intention of the target vehicle based on the probability value of the target vehicle comprises:

    fusing a probability value of the target vehicle at a current moment and a probability value of the target vehicle at a historical moment to obtain the fused probability value of the target vehicle, wherein the historical moment comprises at least any one moment earlier than the current moment; and
    recognizing the behavior intention of the target vehicle based on the fused probability value of the target vehicle.

**6.** The recognition method according to claim 5, wherein the fusing a probability value of the target vehicle at a current moment and a probability value of the target vehicle at a historical moment to obtain the fused probability value of the target vehicle comprises:

fusing the probability value of the target vehicle at the current moment and the probability value of the target vehicle at the historical moment by using a DS evidence theory, to obtain the fused probability value of the target vehicle.

**7.** The recognition method according to claim 5, wherein the fusing a probability value of the target vehicle at a current moment and a probability value of the target vehicle at a historical moment to obtain the fused probability value of the target vehicle comprises:

determining the historical moment based on a preset time window; and
fusing the probability value of the target vehicle at the current moment and the probability value of the target vehicle at the historical moment to obtain the fused probability value of the target vehicle.

**8.** A vehicle driving behavior recognition apparatus, comprising:

an obtaining module, configured to obtain high-precision map information and feedback data of a target vehicle that is collected by a sensor, wherein the target vehicle is another vehicle with which an autonomous vehicle has a risk to collide; and
a processing module, configured to: obtain a target feature of the target vehicle based on the feedback data and the high-precision map information, wherein the target feature is used to indicate driving parameter information of the target vehicle and location information of the target vehicle in a lane; obtain a probability value of the target vehicle based on the target feature and a Bayesian network, wherein the probability value of the target vehicle is used to indicate a probability of occurrence of a behavior status of the target vehicle, the behavior status comprises lane change and cut-in driving behavior of the target vehicle, and the lane change and cut-in driving behavior is driving behavior that the target vehicle changes a lane and cuts into a lane in which the autonomous vehicle is located; and recognize a behavior intention of the target vehicle based on the probability value of the target vehicle, wherein the behavior intention comprises an intention for the driving behavior that the target vehicle changes the lane and cuts into the lane in which the autonomous vehicle is located.

**9.** The recognition apparatus according to claim 8, wherein the target feature comprises lane boundary distance information, the lane boundary distance information is information about a lateral distance between the target vehicle and a boundary of the lane in which the adjacent autonomous vehicle is located, and the processing module is specifically configured to:

obtain visible edge information of the target vehicle based on the feedback data, wherein the feedback data comprises contour information of the target vehicle;
obtain, based on the high-precision map information, lateral boundary line information of the lane in which the autonomous vehicle is located; and
obtain the lane boundary distance information based on the visible edge information and the lateral boundary line information.

**10.** The recognition apparatus according to claim 8 or 9, wherein the processing module is further configured to:

perform discretization processing on the target feature based on a warning time, to obtain a target feature obtained after the discretization processing, wherein the warning time is determined based on a motion status of the autonomous vehicle; and
the processing module is specifically configured to:
obtain the probability value of the target vehicle based on the target feature obtained after the discretization processing and the Bayesian network.

**11.** The recognition apparatus according to any one of claims 8 to 10, wherein probability values that are of the target vehicle at any two moments and that are obtained by using the Bayesian network are independent of each other.

**12.** The recognition apparatus according to claim 11, wherein the probability value of the target vehicle is a fused probability value of the target vehicle, and the processing module is specifically configured to:

fuse a probability value of the target vehicle at a current moment and a probability value of the target vehicle at a historical moment to obtain the fused probability value of the target vehicle, wherein the historical moment comprises at least any one moment earlier than the current moment; and
recognize the behavior intention of the target vehicle based on the fused probability value of the target vehicle.

13. The recognition apparatus according to claim 12, wherein the processing module is specifically configured to: fuse the probability value of the target vehicle at the current moment and the probability value of the target vehicle at the historical moment by using a DS evidence theory, to obtain the fused probability value of the target vehicle.

14. The recognition apparatus according to claim 12, wherein the processing module is specifically configured to:

   determine the historical moment based on a preset time window; and
   fuse the probability value of the target vehicle at the current moment and the probability value of the target vehicle at the historical moment to obtain the fused probability value of the target vehicle.

15. A vehicle driving behavior recognition apparatus, comprising a processor and a memory, wherein the memory is configured to store program instructions, and the processor is configured to invoke the program instructions to perform the recognition method according to any one of claims 1 to 7.

16. An autonomous vehicle, comprising the recognition apparatus according to any one of claims 8 to 14.

17. A computer-readable storage medium, wherein the computer-readable storage medium stores program instructions, and when the program instructions are run by a processor, the recognition method according to any one of claims 1 to 7 is implemented.

18. A chip, wherein the chip comprises a processor and a data interface, and the processor reads, through the data interface, instructions stored in a memory, to perform the recognition method according to any one of claims 1 to 7.

# Vehicle 100

## Travel system 110
- Engine 111
- Transmission apparatus 112
- Energy source 113
- Wheel 114

## Sensing system 120
- Positioning system 121
- Inertial measurement unit 122
- Radar 123
- Laser rangefinder 124
- Camera 125

## Control system 130
- Steering system 131
- Throttle 132
- Braking unit 133
- Computer vision system 134
- Route control system 135
- Obstacle avoidance system 136

## Peripheral device 140
- Wireless communication system 141
- Vehicle-mounted computer 142
- Microphone 143
- Speaker 144

## Computer system 150
- Processor 151
- Memory 152
  - Instructions 153

Power supply 160

User interface 170

FIG. 1

FIG. 2

FIG. 3

FIG. 4

400

High-definition map
service system 440

Perception
system 410

Behavior
recognition

Track
prediction

Planning and
control
system 430

Prediction system 420

FIG. 5

500

| Obtain high-precision map information and feedback data of a target vehicle that is collected by a sensor, where the target vehicle is another vehicle with a risk of colliding with an autonomous vehicle | 510 |

| Obtain a target feature of the target vehicle based on the feedback data and the high-precision map information, where the target feature is used to indicate driving parameter information of the target vehicle and location information of the target vehicle in a lane | 520 |

| Obtain a probability value of the target vehicle based on the target feature and a Bayesian network, where the probability value of the target vehicle is used to indicate a probability of occurrence of a behavior status of the target vehicle, the behavior status includes lane change and cut-in driving behavior of the target vehicle, and the lane change and cut-in driving behavior is driving behavior that the target vehicle changes a lane and cuts into a lane in which the autonomous vehicle is located | 530 |

| Recognize a behavior intention of the target vehicle based on the probability value of the target vehicle, where the behavior intention includes an intention for the driving behavior that the target vehicle changes the lane and cuts into the lane in which the autonomous vehicle is located | 540 |

FIG. 6

600

Determine a priority of a
target vehicle — S610

↓

Extract a feature — S620

↓

Infer a behavior status — S630

↓

Track a behavior status — S640

↓

Predict a behavior intention
of the target vehicle — S650

FIG. 7

Left lane          Right lane

FIG. 8

FIG. 9

FIG. 10

Recognition apparatus 700

Obtaining module 710

Processing module 720

FIG. 11

Recognition apparatus 800

Memory 801

Processor 802

Communication interface 803

Bus 804

FIG. 12

## INTERNATIONAL SEARCH REPORT

| International application No. |
|---|
| **PCT/CN2021/075057** |

**A.      CLASSIFICATION OF SUBJECT MATTER**

B60W 30/095(2012.01)i；  G05D 1/02(2020.01)i；  G01C 21/30(2006.01)i

According to International Patent Classification (IPC) or to both national classification and IPC

**B.      FIELDS SEARCHED**

Minimum documentation searched (classification system followed by classification symbols)

B60W; G05D; G01C; G06K

Documentation searched other than minimum documentation to the extent that such documents are included in the fields searched

Electronic data base consulted during the international search (name of data base and, where practicable, search terms used)

CNABS, CNTXT, SIPOABS, DWPI, VEN, CNKI: 换道, 切入, 概率, 意图, 地图, 距离, 边界, 贝叶斯, 离散, 预警; lane, change, cut-in, map, distance, line, Bayesian, discretization

**C.      DOCUMENTS CONSIDERED TO BE RELEVANT**

| Category* | Citation of document, with indication, where appropriate, of the relevant passages | Relevant to claim No. |
|---|---|---|
| Y | CN 110884490 A (GUANGZHOU XIAOPENG MOTORS TECHNOLOGY COMPANY LTD.) 17 March 2020 (2020-03-17)<br>      description, paragraphs 4-204, figures 1-5 | 1-18 |
| Y | CN 109866776 A (QINGDAO UNIVERSITY OF SCIENCE AND TECHNOLOGY) 11 June 2019 (2019-06-11)<br>      description, pp. 6-8, and figures 1-11 | 1-18 |
| A | CN 110146100 A (HUAWEI TECHNOLOGIES CO., LTD. et al.) 20 August 2019 (2019-08-20)<br>      entire document | 1-18 |
| A | CN 110164183 A (WUHAN UNIVERSITY OF TECHNOLOGY et al.) 23 August 2019 (2019-08-23)<br>      entire document | 1-18 |
| A | CN 110487288 A (HUAWEI TECHNOLOGIES CO., LTD.) 22 November 2019 (2019-11-22)<br>      entire document | 1-18 |
| A | CN 109727490 A (JIANGSU UNIVERSITY) 07 May 2019 (2019-05-07)<br>      entire document | 1-18 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 April 2021** | **10 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/075057** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110597245 A (BEIJING JIAOTONG UNIVERSITY) 20 December 2019 (2019-12-20) entire document | 1-18 |
| A | KR 20190067382 A (HYUNDAI MOTOR CO., LTD. et al.) 17 June 2019 (2019-06-17) entire document | 1-18 |

Form PCT/ISA/210 (second sheet) (January 2015)

INTERNATIONAL SEARCH REPORT
Information on patent family members

International application No.

**PCT/CN2021/075057**

| Patent document cited in search report | | | Publication date (day/month/year) | Patent family member(s) | | | Publication date (day/month/year) |
|---|---|---|---|---|---|---|---|
| CN | 110884490 | A | 17 March 2020 | None | | | |
| CN | 109866776 | A | 11 June 2019 | None | | | |
| CN | 110146100 | A | 20 August 2019 | None | | | |
| CN | 110164183 | A | 23 August 2019 | None | | | |
| CN | 110487288 | A | 22 November 2019 | EP | 3779922 | A1 | 17 February 2021 |
| | | | | WO | 2019218861 | A1 | 21 November 2019 |
| CN | 109727490 | A | 07 May 2019 | None | | | |
| CN | 110597245 | A | 20 December 2019 | None | | | |
| KR | 20190067382 | A | 17 June 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010246907